# EUROPEAN PATENT APPLICATION

(11) **EP 4 632 992 A1**
(43) Date of publication of application: **15.10.2025**
(21) Application number: 24168890.2
(22) Date of filing: 08.04.2024
(51) Int. Cl.: H02J 7/00, H02J 9/00, B60L 58/24, H01M 10/44

(54) **SYSTEMS AND METHODS FOR CONTROLLED TEMPERATURE CHARGING**

(71) Applicant: Instagrid GmbH, 71636 Ludwigsburg (DE)
(72) Inventor: Gantenbein, Jakob, Ludwigsburg (DE)
(74) Representative: Eisenführ Speiser

(57) **Abstract**

Systems, methods and software products for controllably charging at least one energy storage element of an energy storage module. The methods comprise: measuring a temperature of the energy storage module; comparing the temperature to an upper threshold value; allowing a charging current to be supplied to the energy storage module for charging the at least one energy storage element when the temperature is below the upper threshold value; and placing the energy storage module in a charging pause mode when the temperature reaches or rises above the upper threshold value, whereby at least one circuit component of the energy storage module is caused to operate in a low power mode and the charging current is no longer being supplied to the at least one energy storage element.

## Description

### BACKGROUND

### Description of the Related Art

Battery cell packs are often used to power electronic devices. Different combinations of the battery cell packs are used to provide different output voltages.

### SUMMARY

The present disclosure concerns implementing systems, methods and software products for controllably charging at least one energy storage element of an energy storage module. The methods comprise: measuring a temperature of the energy storage module; comparing the temperature to an upper threshold value; allowing a charging current to be supplied to the energy storage module for charging the at least one energy storage element when the temperature is below the upper threshold value; and placing the energy storage module in a charging pause mode when the temperature reaches or rises above the upper threshold value, whereby at least one circuit component of the energy storage module is caused to operate in a low power mode and the charging current is no longer being supplied to the at least one energy storage element.

The present disclosure also concerns a controllable output power circuit. The circuit comprising means (e.g., a circuit and/or processor) configured to: measure a temperature of the energy storage module; compare the temperature to an upper threshold value; allow a charging current to be supplied to the energy storage module for charging the at least one energy storage element when the temperature is below the upper threshold value; and place the energy storage module in a charging pause mode when the temperature reaches or rises above the upper threshold value, whereby at least one circuit component of the energy storage module is caused to operate in a low power mode and the charging current is no longer being supplied to the at least one energy storage element.

The present disclosure further concerns a method for operating a controllable output power circuit in a charging mode. The method comprises: measuring a temperature of at least one energy storage module; calculating a difference between the measured temperature and a set point; calculating a charging current based on the difference; supplying the charging current to the at least one energy storage module; and adjusting the charging current responsive to a measured change in the temperature of the at least one energy storage module, whereby the temperature of the at least energy storage module is maintained within a range of the set point throughout charging.

### BRIEF DESCRIPTION OF THE DRAWINGS

The present solution will be described with reference to the following drawing figures, in which like numerals represent like items throughout the figures.
FIG. 1A provides a schematic diagram of an example energy storage module, according to some non-limiting embodiments or aspects.
FIG. 1B provides an illustrative block diagram of a circuit in the energy storage module.
FIG. 1C provides a circuit diagram of an energy storage module, according to some non-limiting embodiments or aspects.
FIG. 1D provides a perspective view of an energy storage module.
FIG. 1E provides an illustrative circuit diagram for the transistor active bridge circuit. FIGS. 1A-1E are collectively referred to as "FIG. 1".
FIGS. 2A-2C (collectively referred to as "FIG. 2") are schematic diagrams of an example energy storage module container of energy storage modules, according to some non-limiting embodiments or aspects.
FIGS. 3A and 3B (collectively referred to as "FIG. 3") are schematic diagrams of an example power supply system, according to some non-limiting embodiments or aspects.
FIG. 4 is a circuit diagram of an example power supply system, according to some non-limiting embodiments or aspects.
FIG. 5 provides an illustration that is useful for understanding a novel technique for controlling the energy storage modules in accordance with the present solution.
FIGS. 6A-6B ("collectively referred to herein as FIG. 6") provide a flow diagram of an illustrative method in which the energy storage components are charged while the energy storage module's temperature is within a given range.
FIG. 7 provides a graph that is useful for understanding the method of FIG. 6.
FIGS. 8A-8B ("collectively referred to herein as FIG. 8") provide a flow diagram of another illustrative method for charging a plurality of energy storage modules that are connected in series with each other.
FIG. 9 provides a block diagram of an illustrative circuit configured to controllably charge energy storage module(s) in accordance with a transfer function based scheme.
FIG. 10 provides a flow diagram of an illustrative method for controllably charging energy storage module(s) in accordance with a transfer function based scheme.
FIG. 11 provides a graph that is useful for understanding operations of the circuit shown in FIG. 9 and the method shown in FIG. 10.
FIG. 12 is a schematic diagram of an example implementation of a transaction flow in a power supply system, according to some non-limiting embodiments or aspects.

### DETAILED DESCRIPTION

The present solution is described with reference to the attached figures. The figures are not drawn to scale and they are provided merely to illustrate the instant solution. Several aspects of the present solution are described below with reference to example applications for illustration. It should be understood that numerous specific details, relationships, and methods are set forth to provide a full understanding of the present solution. One having ordinary skill in the relevant art, however, will readily recognize that the present solution can be practiced without one or more of the specific details or with other methods. In other instances, well-known structures or operations are not shown in detail to avoid obscuring the present solution. The present solution is not limited by the illustrated ordering of acts or events, as some acts may occur in different orders and/or concurrently with other acts or events. Furthermore, not all illustrated acts or events are required to implement a methodology in accordance with the present solution.

It should also be appreciated that the terminology used herein is for the purpose of describing particular embodiments only and is not intended to be limiting of the present solution. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Further, unless otherwise defined, all terms (including technical and scientific terms) used herein have the same meaning as commonly understood by one of ordinary skill in the art to which this solution belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

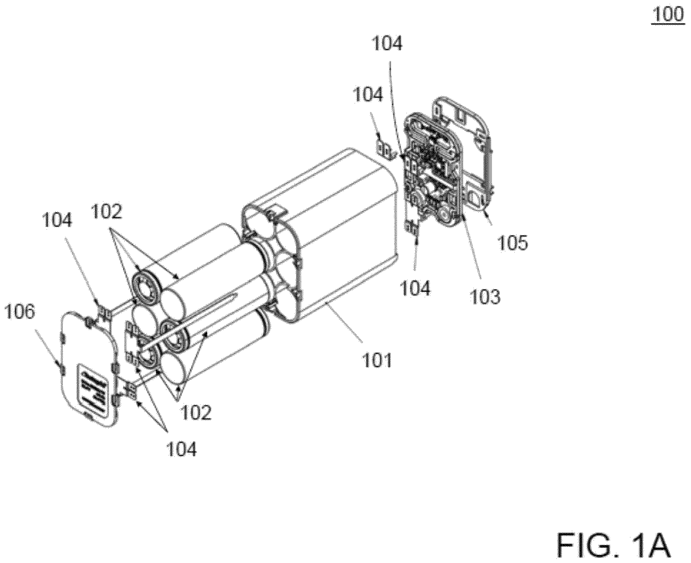

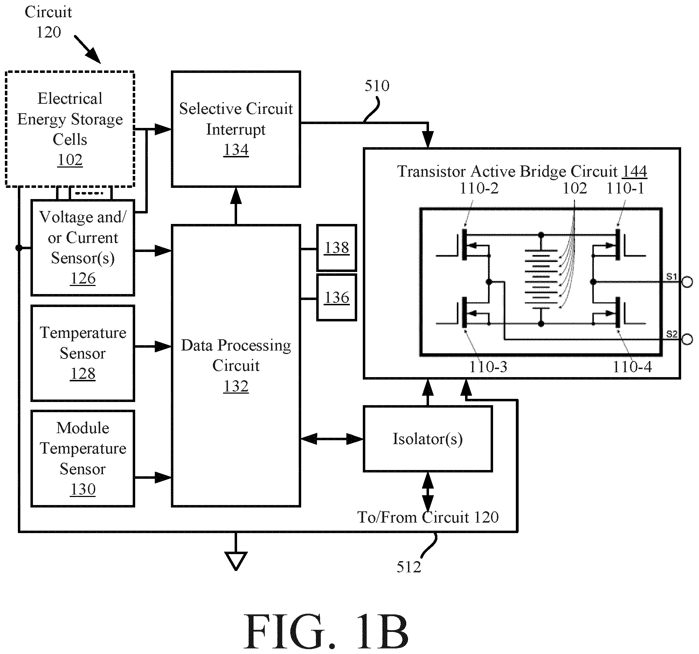

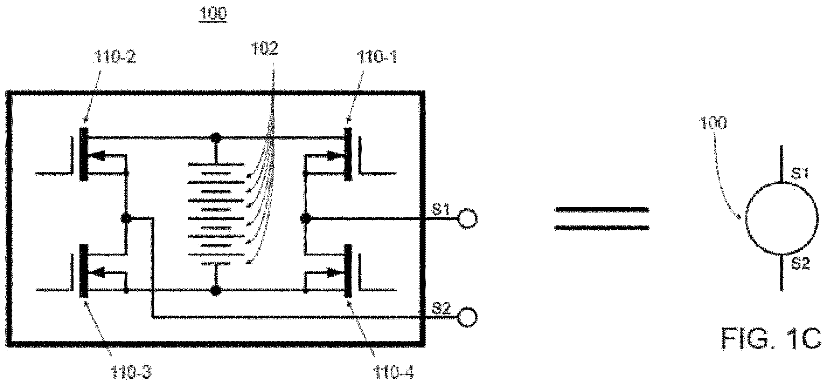

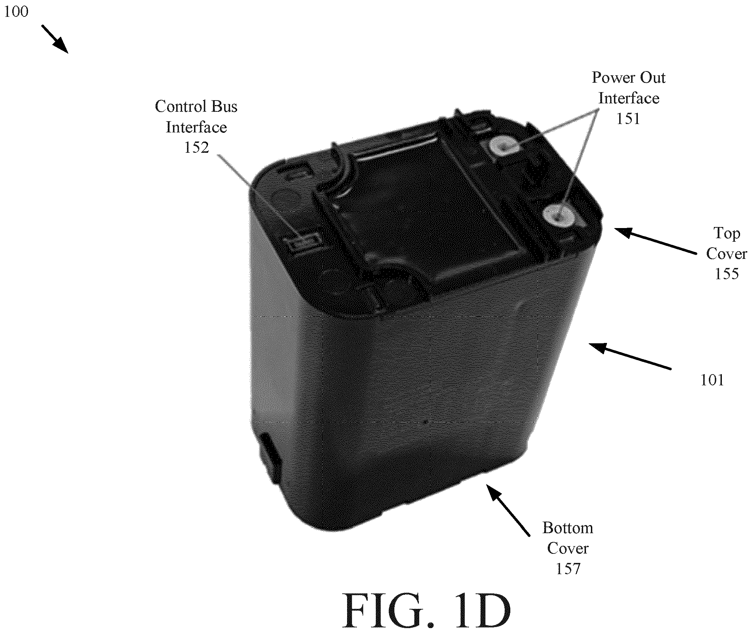

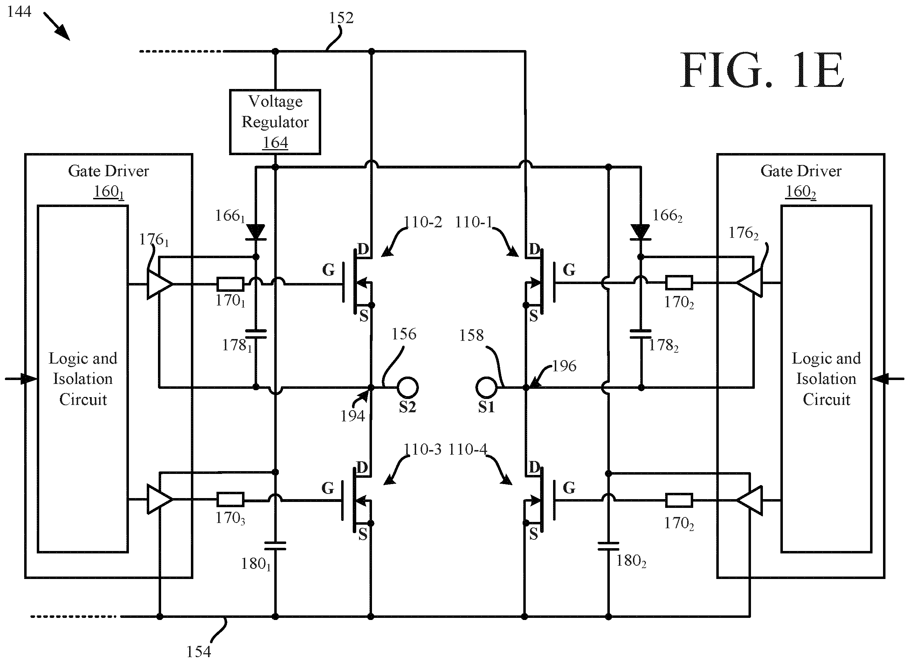

Referring now to FIG. 1A, depicted is a schematic diagram of an example energy storage module **100,** according to some non-limiting embodiments or aspects. As shown in FIG. 1, energy storage module **100** may include housing **101,** at least one energy storage component **102,** module controller **103,** connectors **104,** top cover **105,** and bottom cover **106.** The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

In some non-limiting embodiments or aspects, housing **101** may include plastic, metal, any combination thereof, and/or the like. For example, housing **101** may include a plastic housing.

In some non-limiting embodiments or aspects, housing **101** may be configured to hold at least one (e.g., a plurality of) energy storage components **102.** For example, as shown in FIG. 1, housing **101** may be shaped to have six energy storage components **102** uniformly distributed in an interior space defined by housing **101.**

In some non-limiting embodiments or aspects, each energy storage component **102** may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1, each energy storage component **102** may include a cylindrical cell (e.g., lithium-ion battery cell).

In some non-limiting embodiments or aspects, module controller **103** may include a controller and associated circuitry. Optionally, module controller **103** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments or aspects, connectors **104** may connect the terminals (e.g., ends) of each energy storage component **102** to module controller **103.** Additionally or alternatively, at least one connector **104** may connect at least one terminal (e.g., end) of one energy storage component **102** to another terminal of another energy storage component **102.** For example, connectors **104** may include a conductive (e.g., electrically conductive) material, such as metal and/or the like. In some non-limiting embodiments or aspects, some or all of the connectors **104** may be used for energy storage component **102** (e.g., cell) voltage measurements.

In some non-limiting embodiments or aspects, each of top cover **105** and bottom cover **106** may include plastic, metal, any combination thereof, and/or the like. For example, each of top cover **105** and bottom cover **106** may include a plastic cover. In some non-limiting embodiments or aspects, top cover **105** and bottom cover **106** may be configured to (e.g., sized and shaped to) cover openings at top and bottom ends, respectively, of housing **101.** In some non-limiting embodiments or aspects, top cover **105** may include a first electrical connection (e.g., **S1,** as described herein), a second electrical connection (e.g., **S2,** as described herein), and/or at least one communication connection, as described herein. For example, these connections may allow for electrical and/or communicative connection between module controller **103** and external components (e.g., other components of the power supply system external to the energy storage module housing).

In some non-limiting embodiments or aspects, energy storage module **100** may include a battery module. For example, the battery module may include at least one energy storage component (e.g., a battery cell, such as a rechargeable battery cell). For the purpose of illustration, as shown in FIG. 1A, the battery module may include six energy storage components (e.g., rechargeable battery cells, such as lithium-ion cells, supercapacitors, and/or the like).

In some non-limiting embodiments or aspects, energy storage components **102** (e.g., battery cells) of energy storage module **100** may be connected in series. In some non-limiting embodiments or aspects, energy storage components **102** (e.g., battery cells) of energy storage module **100** may be connected in parallel.

In some non-limiting embodiments or aspects, at least some (e.g., a subset of) energy storage components **102** may be connected in series, for example, so that the combined (e.g., summed and/or the like) voltage of the series-connected components satisfies (e.g., equals, exceeds, and/or the like) the target (e.g., desired) operating voltage of energy storage module **100.** In some non-limiting embodiments or aspects, at least some (e.g., a subset of) energy storage components **102** may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module **100).** For example, energy storage module **100** may include a plurality of subsets of energy storage components **102** such that energy storage components **102** of each subset are connected in series (e.g., to combine to output the desired module voltage), and the subsets may be connected in parallel (e.g., to combine to output the desired module current).

In some non-limiting embodiments or aspects, energy storage module **100** may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, the disclosures of each of which are hereby incorporated by reference in their entireties.

As shown in FIG. 1B, a circuit **120** of the energy storage module **100** comprises voltage and optionally, current sensors **126** connected to the energy storage components **102.** These sensors **126** are configured to measure the voltage and/or current of each energy storage component. Circuit **120** also comprises temperature sensors **128** and a module temperature sensor **130** Each temperature sensor **128** is configured to measure a temperature of one or more energy storage components, while the module temperature sensor **130** is configured to measure an internal temperature of the energy storage module. These sensor measurements are communicated from the sensors **126, 128, 130** to the data processing circuit **132** for processing. The data processing circuit **132** can perform operations to communicate sensor measurements as sensor data to the module controller **103** or an external circuit, and/or perform operations to analyze the sensor measurements to determine if certain criteria is met. For example, if a parameter measurement falls outside of defined range at a given time or for a certain amount of time, then the data processing circuit **132** causes the selective circuit interrupt **134** to transition from a closed state to an open state such that the energy storage module **100** is turned off. The parameter measurement can include a voltage measurement, a current measurement or a temperature measurement.

The data processing circuit **132** may be configured to access datastore(s) **136.** Datastore(s) **136** can comprise computer-readable storage medium on which is stored one or more sets of instructions configured to implement one or more of the methodologies, procedures, or functions described herein. The instructions can also reside, completely or at least partially, within the data processing circuit **132** during execution thereof by the data processing circuit **132.** Datastore(s) **136** and data processing circuit **132** also can constitute machine-readable media. The term "machine-readable media", as used here, refers to a single medium or multiple media (e.g., a centralized or distributed database, and/or associated caches and servers) that store the one or more sets of instructions. The term "machine-readable media", as used here, also refers to any medium that is capable of storing, encoding or carrying a set of instructions for execution by the data processing circuit **132** and that cause the data processing circuit **132** to perform any one or more of the methodologies of the present disclosure. Data processing circuit **132** can include, but is not limited to, processor(s).

Circuit **120** also comprises a transistor active bridge circuit **144.** The transistor active bridge circuit **144** comprises at least one switching element (e.g., first switching element **110-1,** second switching element **110-2,** third switching element **110-3,** and/or fourth switching element **110-4,** collectively referred to as "switching elements **110,"** and individually referred to as "switching element **110"),** first electrical connection **S1,** and second electrical connection **S2.**

In some non-limiting embodiments or aspects, switching elements **110** may be part of (e.g., integrated on, connected to, and/or the like) module controller **103.** In some non-limiting embodiments or aspects, first electrical connection **S1** and/or second electrical connection **S2** may be part of (e.g., integrated on, connected to, and/or the like) module controller **103** and/or may extend through top cover **105.** The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

As shown in the example in FIG. 1B, energy storage module **100** may include six energy storage components **102** (e.g., rechargeable battery cells and/or the like) connected in series. In some non-limiting embodiments or aspects, energy storage components **102** may be in other arrangements and/or have other connections, as described herein.

In some non-limiting embodiments or aspects, switching elements **110** may be switched (e.g., opened, closed, activated, deactivated, and/or the like) to selectively connect energy storage component(s) **102** to first electrical connection **S1** and/or second electrical connection **S2,** e.g., to control a module voltage across first electrical connection **S1** and second electrical connection **S2.** For example, switching elements **110** may be switched so that (1) first electrical connection **S1** and second electrical connection **S2** are both connected to negative side (e.g., DC minus) of energy storage component(s) **102,** (2) first electrical connection **S1** is connected to the negative side (e.g., DC minus) of energy storage component(s) **102** and second electrical connection **S2** is connected to the positive side (e.g., DC plus) of energy storage component(s) **102,** or (3) first electrical connection **S1** is connected to the positive side (e.g., DC plus) of energy storage component(s) **102** and second electrical connection **S2** is connected to the negative side (e.g., DC minus) of energy storage component(s) **102.** As such, the voltage across first electrical connection **S1** and second electrical connection **S2** may be zero, negative, or positive, respectively.

For the purpose of illustration by way for a few examples, to connect both first electrical connection **S1** and second electrical connection **S2** to the negative side (e.g., DC minus) of energy storage component(s) **102,** fourth switching element **110-4** and third switching element may both be activated (e.g., closed, set to act as a closed switch, and/or the like), while second switching element **110-2** and first switching element **110-1** are deactivated (e.g., open, set to act as an open switch, and/or the like). To connect first electrical connection **S1** to the negative side (e.g., DC minus) and connect second electrical connection **S2** to the positive side (e.g., DC plus) of energy storage component(s) **102,** fourth switching element **110-4** and second switching element **110-2** may be activated, while third switching element **110-3** and first switching element **110-1** are deactivated. To connect first electrical connection S1 to the positive side (e.g., DC plus) and second electrical connection **S2** to the negative side (e.g., DC minus) of energy storage component(s) **102,** first switching element **110-1** and third switching element **110-3** may be activated, and fourth switching element **110-4** and second switching element **110-2** may be deactivated. In some non-limiting embodiments or aspects, the switching elements **110** may be operated to be in states such as: a high-impedance (Hi-Z) state (e.g., in which all of the switching elements **110** are deactivated), a bypass state (e.g., in which the low-side switching elements **110-3** and **110-4** are activated while the high-side switching elements **110-1** and **110-2** are deactivated), and two polarity states (e.g., in which the energy storage component(s) **102** are connected between the first electrical connection **S1** and the second electrical connection **S2** in opposite polarity manner).

In some non-limiting embodiments or aspects, each switching element **110** may include at least one of a transistor (e.g., bipolar transistor, field-effect transistor (FET), metal-oxide-semiconductor field-effect transistor (MOSFET), and/or the like), a switch, a contactor, any combination thereof, and/or the like. In some non-limiting embodiments or aspects, the energy storage module **100** may include one or more driver circuits, such as a gate driver circuit, for driving each switching element **110.** For example, the driver circuits may be part of (e.g., integrated on, connected to, and/or the like) module controller **103.**

In some non-limiting embodiments or aspects, each switching element **110** may be driven, or controlled, via the module controller **103.** For example, module controller **103** may control the switching elements **110** to selectively connect energy storage component(s) **102** to first electrical connection **S1** and/or second electrical connection **S2,** as described herein. For example, module controller **103** may be connected to each switching element **110** in order to drive, or optionally control, such switching element **110.** In some non-limiting embodiments or aspects, the module controller **103** provides signals to the gate driver circuit for driving the switching elements **110.**

As shown in FIG. 1C, each energy storage module 100 may be represented by the symbol shown in FIG. 1C (e.g., for brevity and clarity of the following drawings).

FIG. 1D provides an illustration of an energy storage module **100.** An assembly view of the energy storage module **100** is provided in FIG. 1A. Energy storage module **100** comprises a housing **101** in which energy storage components **102** are housed so as to maintain certain positions relative to each other. The energy storage components **102** can be arranged in two rows of three energy storage components as shown in FIG. 1A. The present solution is not limited in this regard. The energy storage components can have a different arrangement than that shown in FIG. 1A. Any number of energy storage components can be provided in the energy storage module in accordance with a given application. Each energy storage component may include, but is not limited to, a lithium-ion cell. The lithium-ion cell may have a cylindrical shape as shown or another shape (e.g., a rectangular shape) not shown.

A top cover **155** and a bottom cover **157** are provided for the housing **101.** The covers **155, 157** may be configured to provide an environment seal with the housing **101.** The environmental seal may be facilitated by gaskets (not visible or shown in FIG. 1D and/or FIG. 1A) compressed between the covers **155, 157** and the housing's sidewalls.

The safe and reliable operation of the energy storage module **100** requires the constant monitoring of each energy storage component **102,** e.g., to detect when its current (optional), voltage and/or temperature fall outside of defined operating range(s). This monitoring is achieved using a circuit **120** that is also housed in the housing **101.** Conductive terminals **104** are provided to connect the energy storage components **102** to the circuit **120** for at least voltage measurements.

As shown in FIG. 1E, the transistor active bridge circuit **144** comprises gate drivers **160₁**, **160₂**, a voltage regulator **164,** diodes **166₁**, **166₂** (collectively referred to as **"166"),** optional resistors **170₁**, **170₂**, **170₃**, **170₄** (collectively referred to as **"170"),** capacitors **178₁**, **178₂**, **180₁**, **180₂**, and a transistor active bridge **144.** The transistor active bridge circuit **144** is supplied a voltage waveform from the energy storage components **102.** As such, the transistor active bridge circuit **144** is connected to energy storage components **102** via input lines **152, 154.** Input line **152** may be referred to as a high input line, while input line may be referred to as a low input line **154.** The transistor active bridge circuit **144** is also connected between a pair of output lines **156, 158.** The output lines **156, 158** are connected to the power interface **151** of FIG. 1D.

The transistor active bridge circuit **144** includes a plurality of switches, shown in this example as field-effect transistors (FETs) **110-2, 110-3, 110-1, 110-4** of an N-channel type. Each of the FETs may comprise a metal-oxide semiconductor FET (MOSFET), but other types of switches or FETs (e.g., insulated gate bipolar transistors (IGBTs), bipolar junction transistors (BJTs), gate turn-off thyristors (GTOs) or their likes or combinations) instead of the shown type can also be contemplated. Each FET **110-2, 110-3, 110-1, 110-4** has three (3) terminals respectively defined as a source **S,** a gate **G** and a drain **D.** An electrical path is be provided from the source to the drain of each FET **110-2, 110-3, 110-1, 110-4.** This path is generally referred to herein as the source-drain path. A source-drain path of first FET **110-2** is connected in series with a source-drain path of the second FET **110-3.** The series connected transistor pair **110-2, 110-3** form a first series transistor combination that is connected across the input lines **152, 154.** A source-drain path of the third FET **110-1** is connected in series with a source-drain path of the fourth FET **110-4** to form a second series transistor combination connected across the input lines **152, 154.**

The transistor active bridge circuit **144** can have an output defined by output lines **156, 158.** A first one of the output lines **156** can be connected to the first series combination **110-2/110-3** at an interconnection point **194** between the first and the second field-effect transistors **110-2, 110-3.** A second one of the output lines **158** can be connected to the second series combination **110-1/110-4** at an interconnection point **196** between the third and fourth field-effect transistors **110-1, 110-4.**

Gate driver **160₁** is provided for driving the gate **G** of each FET **110-2, 110-3.** Similarly, gate driver **160₂** is provided for driving the gate **G** of each FET **110-1, 110-4.** In this regard, the gate drivers are configured to supply a voltage to the gate **G** of each respective FET at certain times for switching the FET to its "on" state or "off" state. The gate drivers are also configured to stop supplying the voltage to the gate **G** of the FET at certain times for switching the FET to its "on" state or "off' state. Gate driver circuits are well known. Known or to be known gate driver circuit can be used here.

When the gate drivers communicate gate control signals to the FETs, the FETs **110-2, 110-3, 110-1, 110-4** will be biased and switch to their "on" states. In effect, current will flow between the drain **D** and source **S** of these FETs. The FETs transition back to their "off' states when the gate control signals are no longer being output from the gate drivers. The gate drivers are configured to prevent the two FETs in each series pair **110-2/110-3** and **110-1/110-4** from being closed simultaneously or concurrently.

The FETs are switched alternatively by the gate driver to provide a certain power output across lines **156, 158.** For example, when the energy storage module is in its "on" state, one of the high side FETs **110-2, 110-1** is transitioned to its "on" state for a given period of time (e.g., 1 microsecond (µs) - 15 milliseconds (ms), as some further non-limiting examples, a few microseconds (µs), 10 µs, 20 µs, 50 µs, 0.1 ms, 2 ms, 5 ms, or even 10 ms). When the energy storage module is in its "off" state, the two high side FETs **110-2, 110-1** are in their "off' states and the two low side FETs **110-3, 110-4** are in their "on" states. In effect, the two low side FETs are conducting while the two high side FETs are not conducting.

The capacitors **178** are provided to store charge for driving the respective FETs **110-2, 110-4.** The respective capacitor **178** is chargeable via their respective diode **166.** In this regard, the supply voltage for the high-side gate driver output stages **176₁**, **176₂** is stored in capacitors **178₁**, **178₂**. Each of the capacitors **178₁**, **178₂** is recharged when the corresponding output line **156, 158** is slewing towards the low supply line **154,** e.g., when the corresponding low side FETs **110-3** or **110-4** is switched to the "on" state. For example, when FET **110-3** is turned "on", the potential at output **S2** is pulled towards the potential at source **S** of FET **110-3**. At this time, diode **166₁** becomes conductive such that current flows from the voltage regulator **164** through capacitor **178₁** and transistor **110-3** to line **154.** In effect, capacitor **178₁** is recharged as the current flows therethrough. When the potential at output **S2** is slewing towards the high supply line **152,** the diode **166₁** acts as a blocking diode such that charge on the capacitor **178₁** is prevented from flowing back towards the voltage regulator **164.** Thus, charged capacitor **178₁** supplies voltage is supplied from the capacitor **178₁** to the high-side gate driver output stage **176₁** for driving the gate terminal of FET **110-2.** At some point, the capacitor will be discharged to a level which may cause the gate driver **160₁** to enter an undervoltage mode in which the gate driver is not operational anymore. The capacitor is recharged before it reaches this level of discharge. An advantage of the preset teachings is that switching of the low-side FETs **110-3, 110-4** can be used to simultaneously charge their corresponding capacitor **178** which is used for driving the high-side FETs **110-2, 110-1.**

It is rather common in gate driver circuits to use charge pumps or transformer isolated (e.g., multi-channel) DC-DC converters to facilitate power supply to the gate driver(s). These circuits tend to be relatively expensive. As evident from FIG. 1E, circuit **144** is absent of any charge pumps and therefore is less costly than conventional transistor active bridge circuits. The elimination of the charge pumps was achieved using circuit components **166, 178** to provide the voltage for the high-side gate driver output stages **176** in a controlled manner to avoid or minimize the likelihood that the gate driver **160₁** enters an undervoltage mode.

Capacitors **180₁**, **180₂** has a similar role as capacitors **178₁**, **178₂**. However, capacitors **180₁**, **180₂** are permanently supplied a voltage signal by the voltage regulator **164.** As such, the low-side FETs **110-3, 110-4** can be turned "on" for as long as desired. When low-side FET **110-3** is in its "on" state, the potential at output **S2** is equal to the potential at source **S** of FET **110-3.** Likewise, the potential at output **S1** is equal to the potentiation at source **S** of FET **110-4** when the FET is in its "on" state.

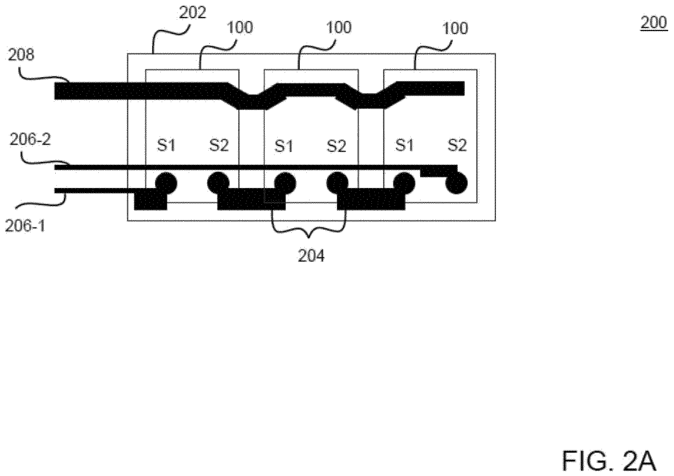

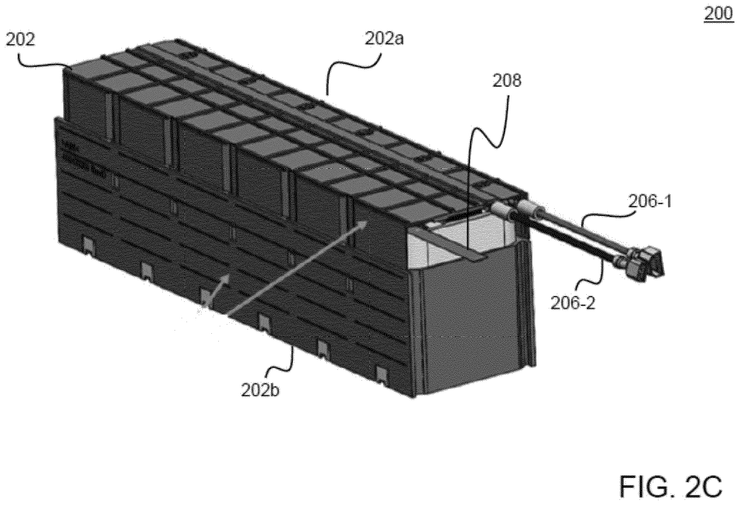

In some non-limiting embodiments or aspects, housing **202** may be configured to hold at least one (e.g., a plurality of, a set of, and/or the like) energy storage modules **100.** For example, as shown in FIG. 2A, housing **202** may be shaped to have three energy storage modules **100** uniformly distributed in an interior space defined by housing **202.** In some non-limiting embodiments or aspects, there may be any number of energy storage modules **100,** as described herein. For example, housing **202** may contain six energy storage modules **100,** nine energy storage modules **100,** twelve energy storage modules **100,** and/or the like.

In some non-limiting embodiments or aspects, bar connections **204** may connect energy storage modules **100** within housing **202.** For example, as shown in FIG. 2A, a first (e.g., left) bar connection **204** may connect second electrical connection **S2** of a first (e.g., left) energy storage module **100** to first electrical connection **S1** of a second (e.g., center) energy storage module **100,** and a second (e.g., right) bar connection **204** may connect second electrical connection **S2** of the second (e.g., center) energy storage module **100** to first electrical connection **S1** of a third (e.g., right) energy storage module **100.** As such, these energy storage modules **100** may be connected in series. In some non-limiting embodiments or aspects, energy storage modules 100 and/or bar connections **204** may be in other arrangements and/or have other connections (e.g., to connect energy storage modules **100** in series, in parallel, a combination of series and parallel connections, and/or the like, as described herein). In some non-limiting embodiments or aspects, bar connections **204** may include a conductive (e.g., electrically conductive) material, such as metal and/or the like.

In some non-limiting embodiments or aspects, electrical connections **206** may include a conductive (e.g., electrically conductive) material, such as metal and/or the like. For example, electrical connections **206** may include a wire, a cable, and/or the like. In some non-limiting embodiments or aspects, electrical connections **206** may allow for electrical connection between energy storage module container **200** (e.g., energy storage modules **100** within energy storage module container **200)** and external components (e.g., other components of the power supply system external to housing **202).**

In some non-limiting embodiments or aspects, first electrical connection **206-1** may be connected to first electrical connection **S1** of at least one energy storage module **100.** For example, first electrical connection **206-1** may be connected to first electrical connection **S1** of a first (e.g., left) energy storage module **100** (e.g., of a group of energy storage modules **100** connected in series). In some non-limiting embodiments or aspects, second electrical connection **206-2** may be connected to second electrical connection **S2** of at least one energy storage module **100.** For example, second electrical connection **206-2** may be connected to second electrical connection **S2** of a last (e.g., right) energy storage module **100** (e.g., of a group of energy storage modules **100** connected in series).

In some non-limiting embodiments or aspects, communication connection **208** may include at least one component that permits communication among other components. For example, communication connection **208** may include a bus connection (e.g., digital bus, such as controller area network bus (CAN-bus), isolated serial port Interface (isoSPI), any derivatives thereof, any combination thereof, and/or the like). In some non-limiting embodiments or aspects, communication connections **208** may allow for communicative connection between container energy storage modules **100** within energy storage module container **200** (e.g., module controllers **103** of such energy storage modules **100)** and external components (e.g., other components of the power supply system external to housing **202,** such as a system controller and/or the like). The system controller may provide a signal (e.g., command) via communication connection **208** to any of module controllers **103** for operating the switching elements **110** thereof (e.g., via one or more gate driver circuits) in a particular (e.g., controlled) manner.

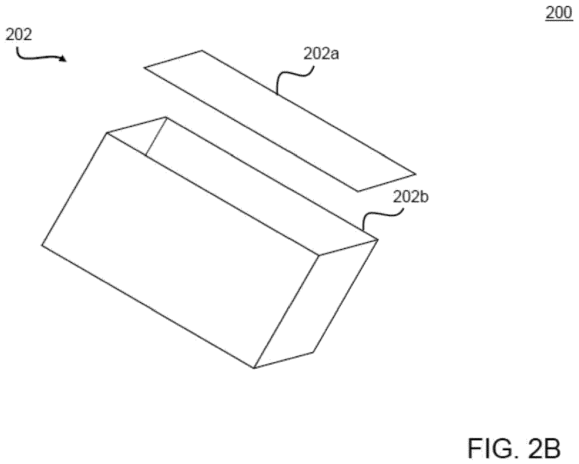

FIGS. 2B-2C provide schematic diagrams of an example energy storage module container 200 of energy storage modules, according to some non-limiting embodiments or aspects. As shown in FIGS. 2A-2C, energy storage module container **200** may include at least one energy storage module **100** (e.g., a plurality or energy storage modules **100,** a set of energy storage modules **100,** and/or the like of), housing **202** (e.g., including top cover **202a** and holder **202b),** bar connections **204,** first electrical connection **206-1** and second electrical connection **206-2** (collectively referred to as "electrical connections **206"** and individually referred to as "electrical connection **206"),** and/or communication connection **208.** The number and arrangement of components shown are provided as an example. In some non-limiting embodiments or aspects, energy storage module container **200** may include additional components, fewer components, different components, or differently arranged components than those shown. Additionally or alternatively, a set of components (e.g., one or more components) of energy storage module container **200** may perform one or more functions described as being performed by another set of components of energy storage module container **200.**

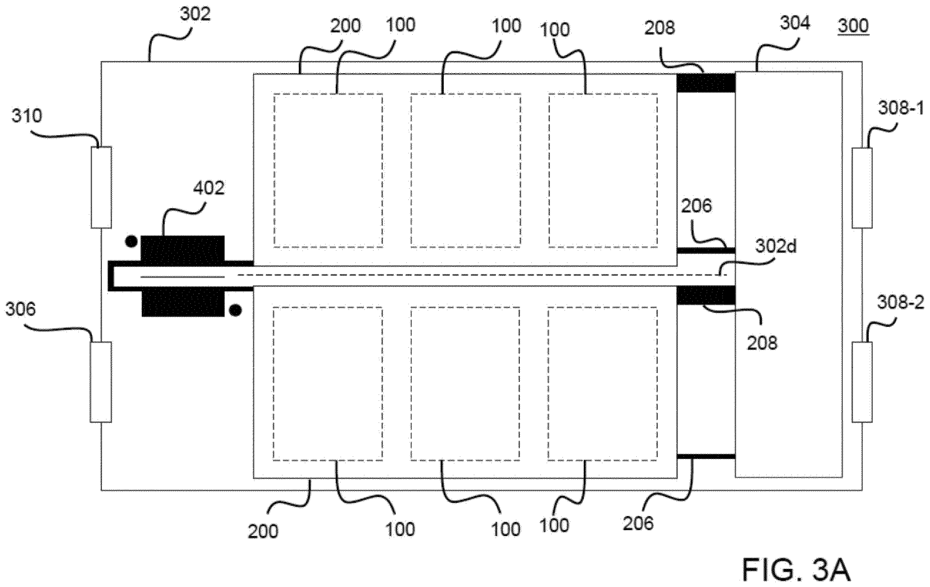

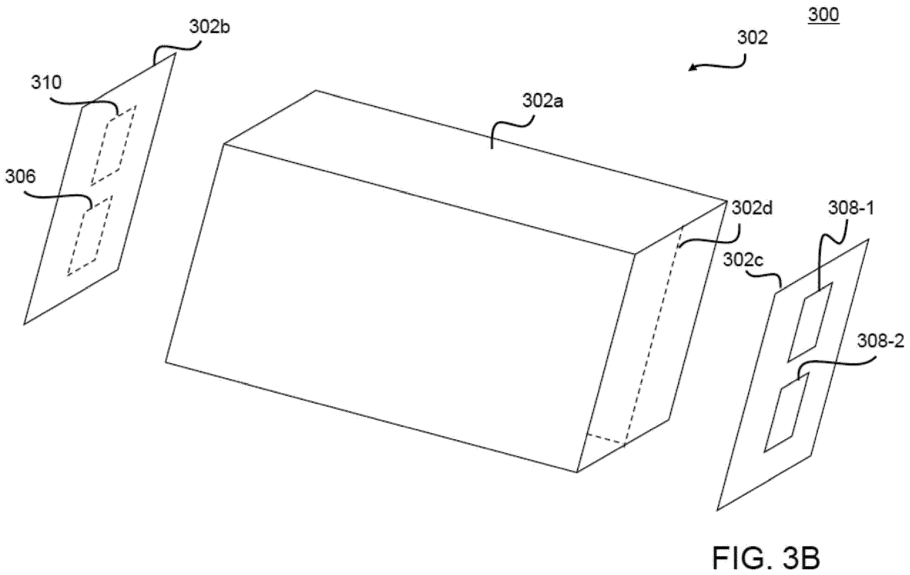

Referring now to FIGS. 3A and 3B, shown are schematic diagrams of an example electrical power system, shown here as a power supply system **300,** according to some non-limiting embodiments or aspects. As shown in FIGS. 3A and 3B, power supply system **300** may include at least one energy storage module container **200** (e.g., each including at least one energy storage module **100),** electrical connections **206,** communication connections **208,** housing **302,** system controller **304,** input connection **306,** at least one output connection (e.g., first output connection **308-1** and/or second output connection **308-2,** collectively referred to as "output connections **308,"** and individually referred to as "output connection **308"),** and/or choke **402.** In some non-limiting embodiments or aspects, power supply system **300** may also include communication connection **310.** For brevity and clarity, electrical connections **206** and communication connections **208** inside energy storage module container **200** are not shown in FIG. 3A, but energy storage module(s) **100** may be connected to electrical connections **206** and/or communication connections **208,** as described herein. For brevity and clarity, connections between energy storage module container **200** (and/or energy storage module(s) **100** thereof) and input connection **306,** output connection(s) **308,** and/or communication connection **310** are not shown in FIG. 3A, but energy storage module container **200** (and/or energy storage module(s) **100** thereof) may be connected to input connection **306,** output connection(s) **308,** and/or communication connection **310,** as described herein. For brevity and clarity, connections between system controller **304** and input connection **306,** output connection(s) **308,** and/or communication connection **310** are not shown in FIG. 3A, but system controller **304** may be connected to input connection **306,** output connection(s) **308,** and/or communication connection **310,** as described herein. The number and arrangement of components shown are provided as an example. In some non-limiting embodiments or aspects, power supply system **300** may include additional components, fewer components, different components, or differently arranged components than those shown. Additionally or alternatively, a set of components (e.g., one or more components) of power supply system **300** may perform one or more functions described as being performed by another set of components of power supply system **300.** For example, in some non-limiting embodiments or aspects, choke **402** may be included in and/or a part of system controller **304.**

In some non-limiting embodiments or aspects, housing **302** may include plastic, metal, any combination thereof, and/or the like. For example, housing **302** may include a metal housing, such as an aluminum housing.

In some non-limiting embodiments or aspects, housing **302** may be configured to hold at least one (e.g., a plurality of) energy storage container(s) **200** and/or at least one (e.g., a plurality of) energy storage modules(s) **100.** For example, housing **302** may be configured to hold two energy storage containers **200,** three energy storage containers **200,** four energy storage containers **200,** and/or the like. For the purpose of illustration, housing **302** may be configured to hold two energy storage containers **200,** each of which may hold twelve energy storage modules(s) **100** (e.g., a total of 24 energy storage modules(s) **100).** For the purpose of illustration, housing **302** may be configured to hold three energy storage containers **200,** each of which may hold eight energy storage modules(s) **100** (e.g., a total of 24 energy storage modules(s) **100).** Other non-limiting configurations are also possible, e.g., housing **302** may hold four energy storage containers **200,** each of which may hold six energy storage modules(s) **100** (e.g., a total of 24 energy storage module(s) **100).** For the purpose of illustration, housing **302** may be configured to hold two energy storage containers **200,** each of which may hold three energy storage modules(s) **100** (e.g., a total of 6 energy storage modules(s) **100).** In some non-limiting embodiments or aspects, energy storage container(s) **200** and/or energy storage module(s) **100** may be in other arrangements within housing **302.**

In some non-limiting embodiments or aspects, housing **302** may include a plurality of compartments separated by dividers **302d** (e.g., walls, barriers, and/or the like). For example, the number of compartments may be equal to the number of energy storage container(s) **200** (e.g., a respective compartment for each respective energy storage container **200).** Each compartment may be separated from the adjacent compartment(s) by a divider **302d.** For example, one divider **302d** may separate an interior space of housing **302** into two compartments, two dividers **302d** may separate an interior space of housing **302** into three compartments, and so on. In some non-limiting embodiments or aspects, divider **302d** may be part of housing **302** and/or may include the same material as housing **302** (e.g., aluminum, metal, plastic, and/or the like).

In some non-limiting embodiments or aspects, as shown in FIG. 3B, housing **302** may include body **302a,** first end cap **302b,** second end cap **302c,** and/or at least one divider **302d.** In some non-limiting embodiments or aspects, body **302a** and/or divider **302d** may include a first material (e.g., metal, such as aluminum), and first end cap **302b** and/or second end cap **302c** may include a second material (e.g., plastic). In some non-limiting embodiments or aspects, at least one of first end cap **302b** and/or second end cap **302c** may include the same material as body **302a** and/or divider **302d.** In some non-limiting embodiments or aspects, first end cap **302b** and second end cap **302c** may be configured to (e.g., sized and shaped to) cover openings at respective ends of body **302a.**

In some non-limiting embodiments or aspects, first end cap **302b** and/or second end cap **302c** may include (and/or may have a space to accommodate) input connection **306,** output connection(s) **308,** and/or communication connection **310.** For the purpose of illustration, as shown in FIG. 3B, input connection **306** and communication connection **310** may be located at first end cap **302b,** and output connections **308** may be located at second end cap **302c.** In some non-limiting embodiments or aspects, input connection **306,** output connection(s) **308,** and/or communication connection **310** may be in other arrangements. For example, all of input connection **306,** output connection(s) **308,** and communication connection **310** may be located at the same end cap (e.g., one of first end cap **302b** or second end cap **302c).** As another example, input connection **306** may be located at one end cap, and communication connection **310** and output connection(s) **308** may be located at the other end cap. As another example, input connection **306** and output connection(s) **308** may be located at one end cap, and communication connection **310** may be located at the other end cap. As another example, first output connection **308-1** may be located at one end cap, and second output connection **308-2** may be located at the other end cap.

In some non-limiting embodiments or aspects, system controller **304** may include a controller and associated circuitry. For example, system controller **304** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, system controller **304** may be communicatively connected to energy storage module container **200** and/or energy storage module(s) **100** (e.g., module controller(s) **103** thereof) by communication connection **208.** In some non-limiting embodiments or aspects, system controller **304** may be electrically connected to energy storage module container **200** and/or energy storage module(s) **100** (e.g., energy storage component(s) **102** thereof) by electrical connection(s) **206.** In some non-limiting embodiments or aspects, choke **402** may be included in and/or a part of system controller **304.**

In some non-limiting embodiments or aspects, input connection **306** may include at least one connector (e.g., at least one standardized electrical plug connector, e.g., for mains electric power and/or electrical devices compatible therewith). In some non-limiting embodiments or aspects, each output connection **308** may include at least one connector (e.g., at least one standardized electrical plug connector, e.g., for mains electric power and/or electrical devices compatible therewith). For example, first output connection **308-1** may include a connector (e.g., standardized electrical plug connector) suitable for 100-127 V (e.g., at a frequency of 60 Hz suitable for the United States of America, North America, etc.). For example, second output connection **308-2** may include a connector (e.g., standardized electrical plug connector) suitable for 200-240 V (e.g., at a frequency of 50 Hz suitable for the European Union, etc.). In some non-limiting embodiments or aspects, communication connection 310 may include at least one connector (e.g., at least one standardized communication plug connector). For example, communication connection **310** may include at least one of a universal serial bus (USB) connector (e.g., USB-A, USB-B, USB-C, USB power delivery (USB-PD), mini-USB, micro-USB, and/or the like), an ethernet connector, a coaxial cable connector, a pin connector, a CAN-bus connector, any combination thereof, and/or the like.

In some non-limiting embodiments or aspects, choke **402** may be electrically connected (e.g., coupled and/or the like) to energy storage module container(s) **200** and/or energy storage module(s) **100,** as described herein. For example, a first energy storage module container **200** and/or a first set of energy storage modules **100** may be connected to a first connection (e.g., first end, first winding, and/or the like) of choke 402, as described herein. Additionally or alternatively, a second energy storage module container **200** and/or a second set of energy storage modules **100** may be connected to a second connection (e.g., second end, second winding, and/or the like) of choke **402,** as described herein.

In some non-limiting embodiments or aspects, system controller **304** may command module controller(s) **103** of energy storage module(s) **100** to generate an output voltage based on a combination (e.g., sum and/or the like) of the respective module voltage of each respective energy storage module **100,** as described herein. For example, by sequentially connecting multiple energy storage module(s) **100** in series in a time-shifted manner, a combined (e.g., summed) voltage may approximate an AC voltage waveform having a target amplitude (e.g., a voltage substantially equal to the nominal voltage of mains electric power, such as 100-127 V, 200-240 V, an/dor the like) and/or a target frequency (e.g., a frequency substantially equal to the nominal frequency of mains electric power, such as 60 Hz, 50 Hz, and/or the like), as described herein.

In some non-limiting embodiments or aspects, system controller **304** may command module controller(s) **103** of energy storage module(s) **100** to cause a respective duty cycle of a respective module voltage of each respective energy storage module **100** to generate an output voltage based on a combination (e.g., sum and/or the like) of the respective module voltage of each respective energy storage module **100,** as described herein. For example, by modulating the duty cycle differently for multiple energy storage module(s) **100** connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation (PWM) type waveform. For example, system controller **304** may command module controller(s) **103** of energy storage modules **100** to switch their output voltage with certain frequency and/or duty-cycle. The exact number or range of the switching frequency is not essential to the scope or generality of the teachings of the present disclosure. As some non-limiting examples, the switching frequency of the system may be in the kHz range (1 kHz to 999 kHz). For example, the switching frequency and/or PWM frequency of the system may be between 40 kHz and 100 kHz. In some cases, the switching frequency and/or PWM frequency of the system may be at or around 90 kHz. In some non-limiting embodiments or aspects, module output may be switching (e.g., PWM) at a frequency between 1.5 kHz to 7.5 kHz. For example, module output may be switching (e.g., PWM) at a frequency between 3.5 kHz to 4.5 kHz. As a further example, module output may be switching (e.g., PWM) at a frequency at or around 3.75 kHz. As another example, module output may be switching (e.g., PWM) at a frequency at or around 4 kHz. In some non-limiting embodiments or aspects, the switching frequency or PWM frequency of the system may be proportional to a multiplication of the switching frequency and/or PWM frequency of the energy storage module **100** and the number of energy storage modules **100.** It shall be appreciated that duty cycle may be anywhere between 0% and 100%, e.g., depending on the time at which the respective energy storage modules **100** are being operated. For example, 0% duty cycle for a given energy storage module **100** may mean that the energy storage module **100** is instructed to be deactivated or in a bypass mode (energy storage module **100** not contributing to the output voltage, but still able to carry current), and 100% duty cycle may mean that that energy storage module **100** is instructed to be switched on or activated in a given polarity. For example, by sweeping the duty cycle of a given energy storage module **100** over time (e.g., between 0% and 100%), the effective output voltage of that energy storage module **100** can be more finely incremented or decremented between voltage steps associated with full switching between two consecutive energy storage modules **100.** Various energy storage modules **100** may be orchestrated, e.g., by system controller **304,** to generate an output voltage based on a combination of the respective module voltage of each respective energy storage module **100,** as described herein.

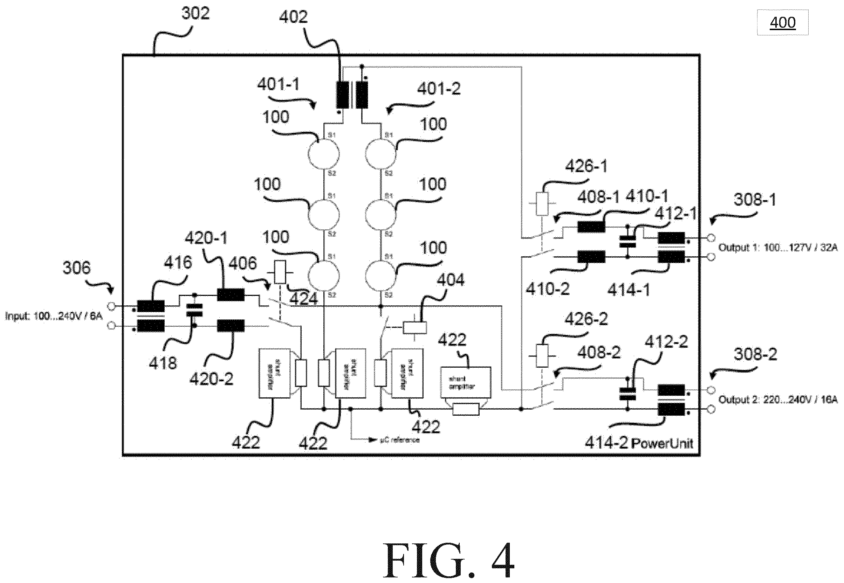

Referring now to FIG. 4, shown is a circuit diagram of an example power supply system **400,** according to some non-limiting embodiments or aspects. In some non-limiting embodiments or aspects, power supply system **400** may be the same as or similar to power supply system **300.** The number and arrangement of components shown are provided as an example. In some non-limiting embodiments or aspects, power supply system **400** may include additional components, fewer components, different components, or differently arranged components than those shown. Additionally or alternatively, a set of components (e.g., one or more components) of power supply system **400** may perform one or more functions described as being performed by another set of components of power supply system **400.**

In some non-limiting embodiments or aspects, as shown in FIG. 4, input connection **306** may be connected to input choke **416.** Input choke **416** may be connected to input capacitor **418** and/or at least one input inductor (e.g., first input inductor **420-1** and/or second input inductor **420-2,** collectively referred to as "input inductors **420,"** and individually referred to as "input inductor **420").** For example, input choke **416** may be provided for electromagnetic compatibility (EMC) reasons. Similarly, input capacitor **418** may be provided as an EMC capacitor (and/or class-X capacitor), which may stabilize the input voltage and/or make the input less impedant at higher frequencies. For example, input inductor(s) **420** may be used to operate the electrical system **400** in a controlled current mode.

In some non-limiting embodiments or aspects, first output connection **308-1** may be connected to first output choke **414-1.** First output choke **414-1** may be connected to at least one of capacitor **412-1** and/or inductors **410.**

In some non-limiting embodiments or aspects, second output connection **308-2** may be connected to second output choke **414-2.** Second output choke **414-2** may be connected to capacitor **412-2.**

In some non-limiting embodiments or aspects, each of the chokes (e.g., input choke **416,** first output choke **414-1,** and/or second output choke **414-2)** may be common-mode chokes and/or the like, e.g., used for EMC performance. It shall be appreciated that further discussion of EMC inductors or capacitors is not essential to the scope or generality of the present teachings.

In some non-limiting embodiments or aspects, input switch **424** may selectively connect and/or disconnect input **406** from first set **401-1** and second set **401-2** of energy storage modules **100.** In some non-limiting embodiments or aspects, to operate in a third mode of operation (e.g., a charging mode of operation) input switch **424** at input **406** may be switched to a first state (e.g., closed, activated, and/or the like). For example, switching input switch **424** to the first state (e.g., closed, activated, and/or the like) may allow current to flow from input connection **306** through input **406** to first set **401-1** and second set **401-2** of energy storage modules **100** (e.g., to charge energy storage modules **100).** In some non-limiting embodiments or aspects, a power source (e.g., mains electric power, generator power, renewable power (e.g., solar, wind, and/or the like), and/or the like) may be connected to input connection **306.** In some non-limiting embodiments or aspects, system controller **300** may control module controllers of energy storage modules **100** to charge energy storage components **102** thereof (e.g., based on power from the power source).

In some non-limiting embodiments or aspects, to discontinue the third mode of operation (e.g., stop charging) and/or to prevent current from flowing to input connection **306** when power supply system **400** is not in the third (e.g., charging) mode of operation, input switch **424** at input **406** may be switched to a second state (e.g., open, deactivated, and/or the like).

In some non-limiting embodiments or aspects, at least one output switching element (e.g., first output switch **426-1** and/or second output switch **426-1,** collectively referred to as "output switches **426,"** and individually referred to as "output switch **426")** may selectively connect and/or disconnect outputs **408** from first set **401-1** and second set **401-2** of energy storage modules **100.**

In some non-limiting embodiments or aspects, to operate in the first mode of operation, in addition to switching of switch **404** to a first state (e.g., closed, activated and/or the like), first output switch **426-1** may be switched to a first state (e.g., closed, activated and/or the like). For example, this may allow current to flow from first set **401-1** and second set **401-2** of energy storage modules **100** through first output **408-1** (and inductors **410** and/or capacitor **412-1)** to first output connection **308-1** (e.g., to supply power to a load connected to first output connection **308-1).** In some non-limiting embodiments or aspects, to prevent current from flowing to first output connection **308-1** when power supply system **400** is not in the first mode of operation, first output switch **426-1** may be switched to a second state (e.g., opened, deactivated and/or the like).

In some non-limiting embodiments or aspects, to operate in the second mode of operation, in addition to switching of switch **404** to a second state (e.g., opened, deactivated and/or the like), second output switch **426-2** may be switched to a first state (e.g., closed, activated and/or the like). For example, this may allow current to flow from first set **401-1** and second set **401-2** of energy storage modules **100** through second output **408-2** (and capacitor **412-2)** to second output connection **308-2** (e.g., to supply power to a load connected to second output connection **308-2).** In some non-limiting embodiments or aspects, to prevent current from flowing to second output connection **308-2** when power supply system **400** is not in the second mode of operation, second output switch **426-2** may be switched to a second state (e.g., opened, deactivated and/or the like).

In some non-limiting embodiments, the first mode of operation and the second mode of operation may be used to provide multi-voltage operation via the power supply system **400.** For example, in the first mode of operation, the first set **401-1** and second set **401-2** of energy storage modules **100** may be connected in parallel, while in the second mode of operation, the first set **401-1** and second set **401-2** of energy storage modules **100** may be connected in series. It shall be appreciated that the first mode of operation may be provide an output voltage which is lower than the output voltage provided in the second mode of operation, however the output current provided in the first mode of operation may be larger than the output current provided in the second mode of operation. For example, the first mode of operation may provide an 110 V output, while the second mode of operation provides a 220 V output. This can advantageously allow the power supply system **400** for multi-voltage domain operation. For example, 110 V AC mains voltage domain is predominantly used in the US, while 220 V AC mains voltage domain is used in Europe. The power supply system **400** can thus allow flexibility in using electrical appliances rated for any of the voltage domains. A particular advantage of the shown configuration can be that output power can be similar or identical in either mode. For example, assuming identical sets **(401-1** and **401-2)** operating identically, output current in the first mode can be double of the output current in the second mode even though the output voltage in the first mode is half of the output voltage in the second mode. This can allow similar power levels to be used despite the voltage domain which the power supply system **400** output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the power supply system **400.**

In some non-limiting embodiments or aspects, each of input switch **424** and output switches **426** may include at least one of a switch, a contactor, a transistor, any combination thereof, and/or the like. For example, each of input switch **424** and output switches **426** may include at least one of an SPST switch, a DPDT switch, an SPDT switch, a DPST switch, any combination thereof, and/or the like. For example, each of input switch **424** and output switches **426** may include at least one of a DPDT switch or a DPST switch. For the purpose of illustration, as shown in FIG. 4, each of input switch **424** and output switches **426** may include a DPST switch or a DPDT switch.

In some non-limiting embodiments or aspects, power supply system **400** may include current sensors **422,** which may be in communication with system controller **304** (e.g., a microcontroller). In some non-limiting embodiments or aspects, each current sensor **422** may include a shunt amplifier. For example, each shunt amplifier may refer to a common potential (e.g., reference voltage), to which system controller **304** (e.g., a microcontroller) also may refer. In some non-limiting embodiments or aspects, at least some (e.g., all, a subset, and/or the like) of current sensors **422** may be any other suitable type of current sensor. For example, a current sensor **422** may include measuring voltage drop across a resistor connected in series (e.g., to at least one of first set **401-1** and/or second set **401-2** of energy storage modules **100),** e.g., to measure the current flowing through the resistor (and/or any component in series with the resistor). In some non-limiting embodiments or aspects, at least one current sensor **422** may be of a different type than another current sensor **422.** For example, a current sensor **422** connected to of first set **401-1** of energy storage modules **100** may be of a different type than another current sensor **422** connected to second set **401-2** of energy storage modules **100.**

In some non-limiting embodiments or aspects, by measuring current at locations of current sensors **422,** the following may be measured (e.g., by system controller **304** and/or the like): output current (e.g., in a redundant manner), input current (e.g., in a redundant manner), circular current (e.g., if strings are connected in parallel). In some non-limiting embodiments or aspects, current sensors may measure current flowing through each of first set **401-1** and second set **401-2** of energy storage modules **100.** As such, relative measurements may be performed to detect if a circular (e.g., loop) current is flowing between first set **401-1** and second set **401-2** of energy storage modules **100.** In other words, such relative measurements may be used to detect that the load current is divided evenly between the sets. Such measurements also may be used for orchestrating the operation of energy storage modules **100,** e.g., in such a manner that the circular (e.g., loop) current may be reduced (e.g., eliminated). Additionally or alternatively, such orchestration may also include disabling certain energy storage modules **100** in any of sets **401,** even if such disabling causes an unequal number of active energy storage modules **100** between the sets **401.** This may help running the system **400,** for example, even if energy storage modules **100** between sets **401** have different charge levels. Additionally or alternatively, such orchestration may include first module voltages of first set **401-1** being interleaved with second module voltages of second set **401-2.** Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set **401-1** and the second set **401-2.** This may result in the loop current which tends to flow from one set **401** to the other set **401** to be a low frequency current which can be used, e.g., to equalize state of charge between the two sets **401.** Choke **402,** even in such non-limiting embodiments or aspects, may block the high frequency currents, but may allow low frequency or DC current to flow from the set **401** having a higher voltage than the other set **401.** As such, power supply system **400** may be more robust, flexible, and balanced. In some non-limiting embodiments or aspects, current sensors **422** may be leveraged for making absolute measurements, such as determining total current flowing through first set **401-1** and/or second set **401-2** of energy storage modules **100.** It shall be appreciated that said imbalance may be caused by unequal number of energy storage modules **100** operating in one set **401** as compared to the number of energy storage modules **100** operating in the other set **401.** Additionally or alternatively, the imbalance may be due to unequal charge level between the two sets **401.** Similarly, the power supply system **400** may also include circuit for voltage measurement in one or more networks of the power supply system **400.** It is neither essential nor limiting to the present disclosure to specify which voltage measurement circuit or scheme must be used.

As discussed above, the power supply **100** has an AC input **290** for charging the internal electrical energy storage cells **400.** Charging is done in a controlled current mode. In this regard, the power supply **100** comprises control circuitry and filter components to operate at a desired current waveform. The power supply **100** is designed to quickly charge the electrical energy storage cells **400** without overheating.

For the energy modules **104,** there may be two modes of operation, namely a first mode and a second mode. The energy modules **104** are deactivated in the first mode which results in a lowest self-consumption. The energy modules **104** are activated in the second mode which results in significant self-consumption. The transistor active bridge circuit **504** operates in accordance with commands from the system controller **200.**

In one implementation, the energy modules **104** are always kept in the second mode during charging, but the root mean square (RMS) value of charging current may vary between two values (e.g., 0 Amps and 4 Amps). So, there are two states for current control. A first state exists when the temperature of an energy module reaches a first threshold and current is set to a first value (e.g., zero amps). The energy module cools down in the first state. A second state exists when the temperature of the energy module falls below a second threshold (which is below the first threshold) and current is set to a higher second value (e.g., four amps).

In the first state there are two main sources of heat: data processing circuit **502** and transistor active bridge circuit **504.** The losses are constant and irrelevant of the current. The following additional sources of heat are added when the energy module is operating in the second state: electrical energy storage cells **400** and other resistive components (e.g., traces and connectors). This results in (i) ohmic loss in the electrical energy storage cells **400** plus the other resistive components and (ii) ohmic loss plus switching loss in the power stage. The ohmic losses have a quadratic dependence of the current. Switching loss tends to be roughly linear.

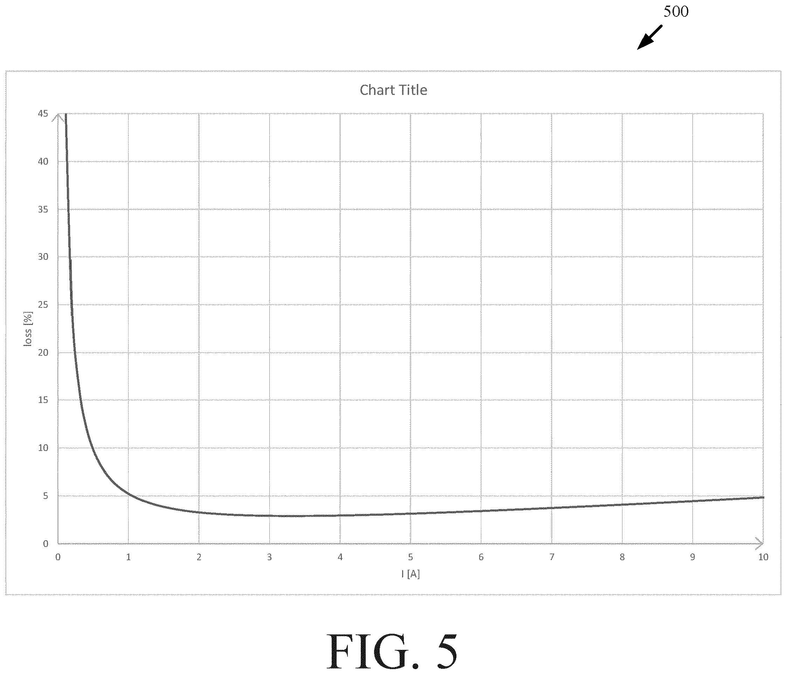

Ignoring the switching loss and with exemplary values of eleven watts constant losses, 1 R ohmic resistance for the complete system and 3.6 V cell voltage, the percentual loss depending on the current results in the values plotted on graph **500** of FIG. 5.

From the above, the problem is two-fold. Thus, the present solution is designed to have a dual purpose of (1) charging the energy modules as fast as possible and (2) extending the life of the energy modules.

With regard to the above-mentioned purpose (1) of the present solution, the amount of thermal energy, that can be conducted from the device into the environment, is (among other factors) dependent on the temperature difference between the device and the environment. In other words, the higher the temperature of the device the higher is its cooling rate. It is therefore beneficial if the system is charged at a high temperature for the charging time.

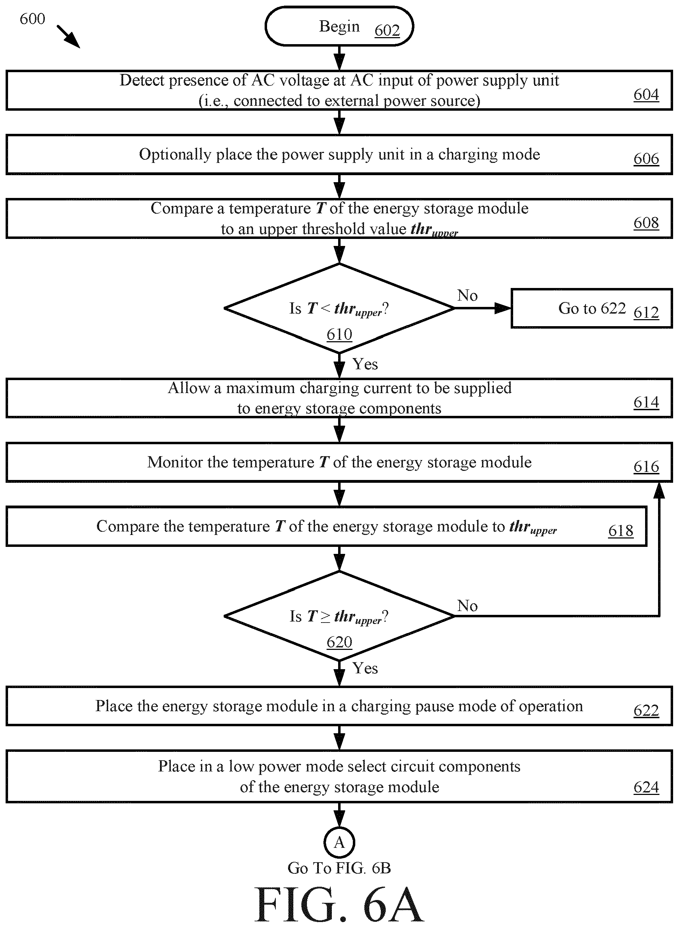

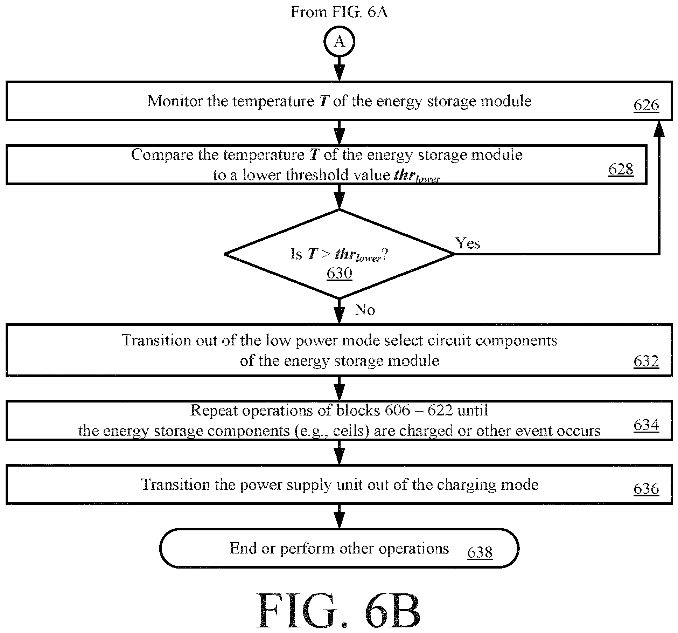

An illustrative method **600** is shown in FIG. 6 in which the electrical energy storage cells **400** are charged while the energy storage module's temperature is within a given range ***thrᵤₚₚₑᵣ*** - ***thr_{lower}**.* Method **600** is provided from the perspective of a single energy module being charged in accordance with a local temperature scheme. Another method **800** will be discussed below in relation to a scenario in which a plurality of energy modules are being controlled in accordance with a global temperature scheme.

As shown in FIG. 6A, method **600** begins with **602** where the presence of an AC voltage is detected at an AC input of a power supply system (e.g., power supply system **300** of FIG. 3 or 400 of FIG. 4). This detection is made when the power supply system is connected to an external power source, for example, an AC mains. The power supply system is then optionally placed in a charging mode as shown by block **606.**

Next in block **608,** a temperature ***T*** of the energy storage module (e.g., energy storage module **100** of FIG. 1) is compared to an upper threshold value ***thrᵤₚₚₑᵣ**.* The upper threshold value ***thrᵤₚₚₑᵣ*** can include, but is not limited to, a maximum desired temperature for charging of the energy storage module. If the temperature ***T*** is not less than the upper threshold value ***thrᵤₚₚₑᵣ* [610:NO],** then method **600** continues to block **622,** as shown by block **612.** If the temperature ***T*** is less than the upper threshold value ***thrᵤₚₚₑᵣ* [610:YES],** then method **600** continues to block **614** where a maximum charging current is allowed to be supplied to the energy storage components (e.g., energy storage components **102** of FIG. 1).

As the energy storage components are being charged using the maximum charging current, the system continues to monitor the temperature ***T*** of the energy storage module. The temperature ***T*** is once again compared to the upper threshold value ***thrᵤₚₚₑᵣ*** in block **618.** If the temperature ***T*** is less than the upper threshold value ***thrᵤₚₚₑᵣ* [610:NO],** then method **600** returns to block **616.** If the temperature ***T*** is greater than or equal to the upper threshold value ***thrᵤₚₚₑᵣ* [610:YES],** then method **600** continues to block **622** where the energy storage module is placed in a charging pause mode of operation.

In the charging pause mode of operation, select circuit components of the energy storage module are placed in a low power mode. The select circuit components can include, but are not limited to, the data processing circuit **132** of FIG. 1B and/or transistor active bridge circuit **144** of FIG. 1B. With regard to the transistor active bridge circuit **144,** it can be placed in a lower power mode of operation, for example, by discontinuing the supply of power to the gate drivers **160₁**, **160₂** of FIG. 1E. Upon completing the operations of block **624,** method **600** continues to block **626** of FIG. 6B.

Block **626** involves monitoring the temperature ***T*** of the energy storage module while it is in the charging pause mode of operation. The temperature ***T*** is compared to the lower threshold value ***thr_{lower}*** in block **628.** If the temperature ***T*** is greater than the lower threshold value ***thr_{lower}* [630:YES],** method **600** return to block **626.** If the temperature ***T*** is equal to or less than the lower threshold value ***thr_{lower}* [630:NO],** method **600** continues to block **632** where the select circuit components are transitioned out of the low power mode.

Method **600** repeats operations of block **606-622** until the energy storage components are charged or other event occurs, as shown by block **634.** In response to the energy storage components being charged or an occurrence of the other event, the power supply unit is transitioned out of the charging mode as shown by block **636.** Subsequently, method **600** continues to block **638** where it ends or other operations are performed. The other operations can include, but are not limited to, returning to block **602** of FIG. 6A.

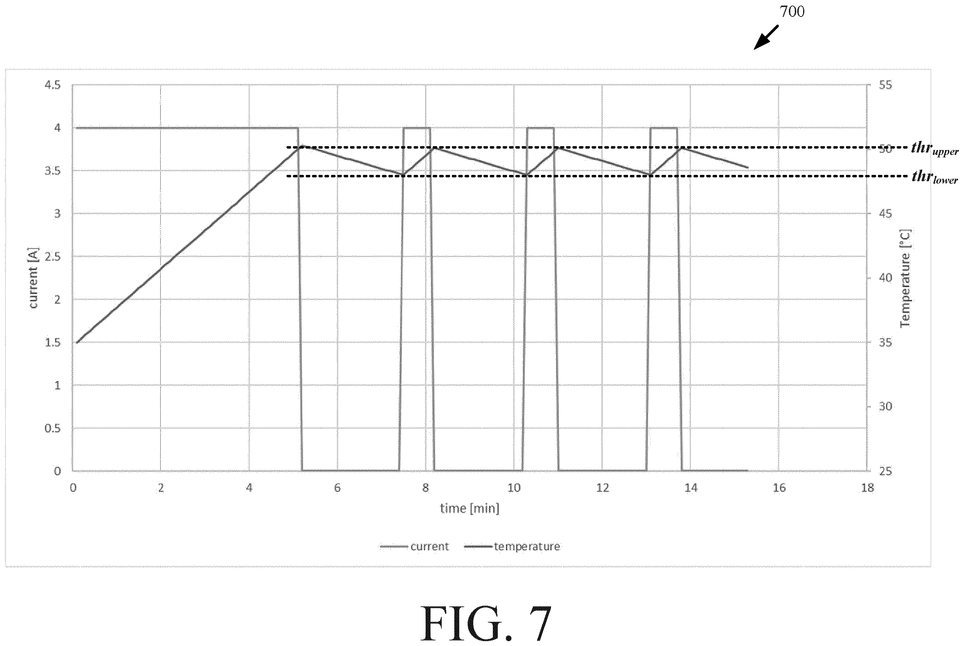

A graph **700** is provided in FIG. 7 that is useful for understanding method **600.** At time zero minutes, the temperature of the energy storage module is below the lower threshold value ***thr_{lower}**.* As such, a maximum charging current (e.g., 4 Amps) is supplied to the energy storage components of the energy storage module. The maximum charging current continues to be supplied to the energy storage components until a temperature ***T*** of the energy storage module reaches the upper threshold value ***thrᵤₚₚₑᵣ**.* For example, this occurs 5 minutes after the starting time of charging. At this time, supply of the charging current is discontinued such that the output voltage decreases to zero volts. Additionally, the energy storage module is placed in the charging pause mode of operation. These actions are performed so that the energy storage module cool down. Once the temperature ***T*** of the energy storage module reaches the lower threshold value ***thr_{lower}**,* the maximum charging current is once again supplied to the energy storage components of the energy storage module. This process is repeated until, for example, the energy storage components are charged. It can be seen from the graph **500** of FIG. 5 that working with higher currents is relatively efficient. With this solution, it is possible to charge the energy module in a relatively efficient way while passive consumers are active.

This solution has many advantages. For example, a significant amount of temperature input results from the self-heating of the energy modules **104.** The total energy loss during charging (and therefore the temperature increase) is a function of the self-heating losses and the ohmic-losses, which are dependent on the quadratic current. The minimal energy loss is achieved by using a high charging current. Accordingly, the maximum possible charging current is used while charging and the energy module is turned "off" during a cool-down break. This results in a minimal energy loss and a faster charging time.

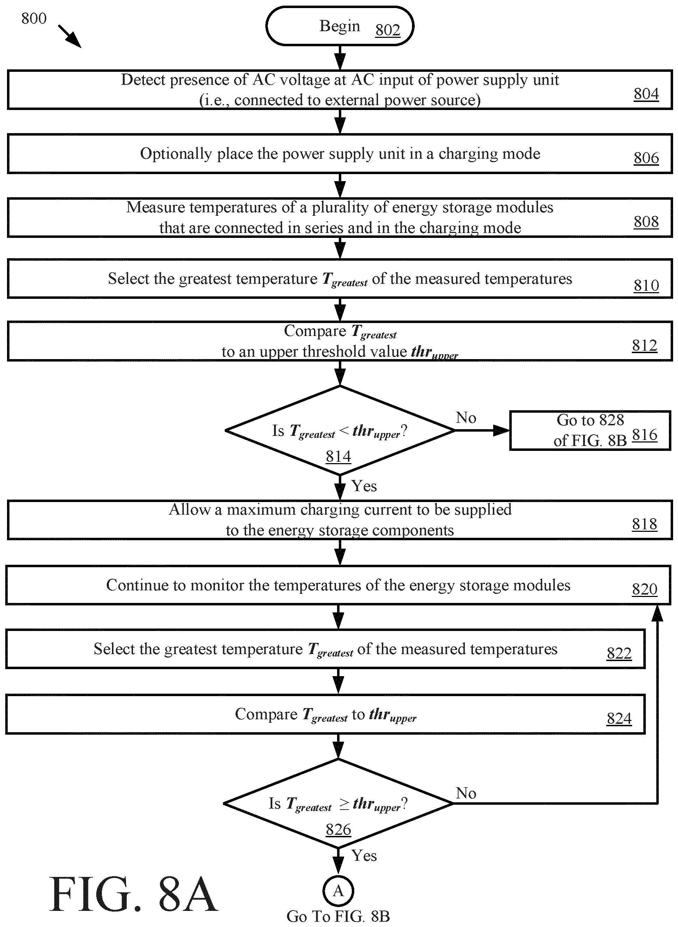

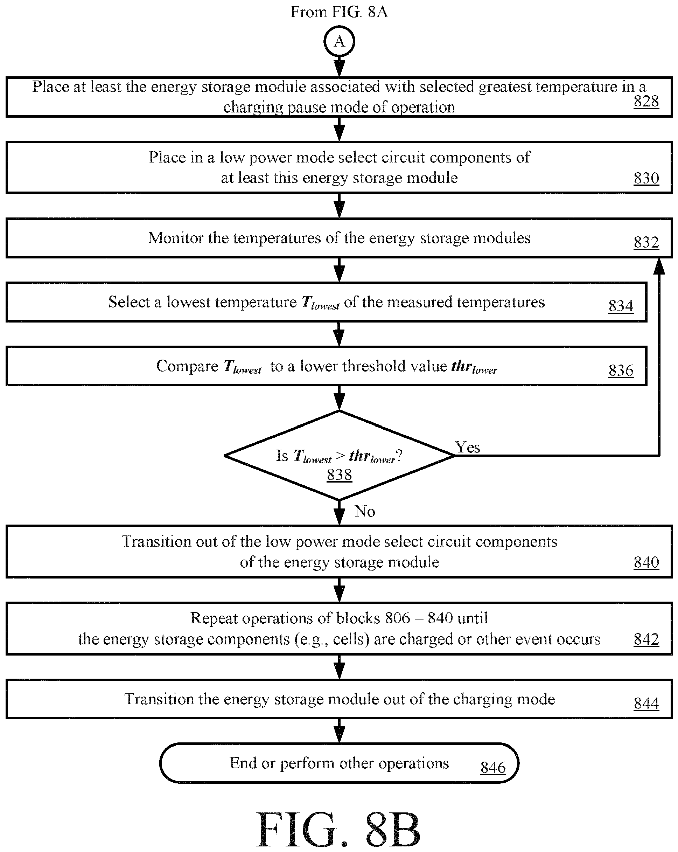

FIG. 8 provides a flow diagram of another method **800** for charging a plurality of energy modules in accordance with a global temperature scheme. Method **800** begins with **802** and continues to **804** where the presence of an AC voltage is detected at an AC input of a power supply system (e.g., power supply system 300 of FIG. 3 or **400** of FIG. 4). This detection is made when the power supply system is connected to an external power source, for example, an AC mains. The power supply system is then optionally placed in a charging mode as shown by block 8606.

Next in block **808,** temperatures of a plurality of energy storage modules (e.g., energy storage modules **100** of FIG. 2A) are measured. The energy storage modules are connected in series with each other and are in the charging mode of operation. The system selects, in block **810,** a greatest temperature ***T_{greatest}*** from the measured temperatures. The greatest temperature ***T_{greatest}*** is compared to an upper threshold value ***thrᵤₚₚₑᵣ**,* as shown by block **812.** If the greatest temperature ***T_{greatest}*** is greater than or equal to the upper threshold value ***thrᵤₚₚₑᵣ* [814:NO],** method **800** goes to block **828** of FIG. 8B, as shown by block **816.** The operations of block **828** will be discussed below. Otherwise **[814:YES],** method **800** continues to block **818** where a maximum charging current is allowed to be supplied to the energy storage components of the energy storage modules.

The system continues to monitor the temperatures of the energy storage modules while the energy storage components are being charged, as shown by block **820.** Next in block **822,** the greatest temperature ***T_{greatest}*** is once again selected from the measured temperatures of the energy storage modules. The greatest temperature ***T_{greatest}*** is compared to the upper threshold value ***thrᵤₚₚₑᵣ.*** If the greatest temperature ***T_{greatest}*** is less than the upper threshold value ***thrᵤₚₚₑᵣ* [826:NO],** method **800** return to block **820.** Otherwise **[826:YES],** method **800** continues to block **828** of FIG. 8B.

Block **828** involves placing at least the energy storage module associated with the selected greatest temperature in a charging pause mode of operation. In some scenarios, all energy storage modules are placed in the charging mode of operation. In other scenarios, only those energy modules with temperatures exceeding the upper threshold value ***thrᵤₚₚₑᵣ*** are placed in the charging pause mode of operation at this time.

In the charging pause mode of operation, select circuit components of the energy storage module are placed in a low power mode. The select circuit components can include, but are not limited to, the data processing circuit **132** of FIG. 1B and/or transistor active bridge circuit **144** of FIG. 1B. With regard to the transistor active bridge circuit **144,** it can be placed in a lower power mode of operation, for example, by discontinuing the supply of power to the gate drivers **160₁**, **160₂** of FIG. 1E. Upon completing the operations of block **830,** method **800** continues to block **832.**

Block **832** involves monitoring the temperatures of the energy storage modules. A lowest temperature ***T_{lowest}*** of the measured temperatures is selected in block **834.** The lowest temperature ***T_{lowest}*** is compared to a lower threshold value ***thr_{lower}*** in block **836.** If the temperature ***T_{lowest}*** is greater than the lower threshold value ***thr_{lower}* [838:YES],** method **800** return to block **832.** If the temperature ***T*** is equal to or less than the lower threshold value ***thr_{lower}* [630:NO],** method **800** continues to block **840** where the select circuit components are transitioned out of the low power mode.

Method **800** repeats operations of block **806-840** until the energy storage components are charged or other event occurs, as shown by block **842.** In response to the energy storage components being charged or an occurrence of the other event, the power supply unit is transitioned out of the charging mode as shown by block **844.** Subsequently, method **800** continues to block **846** where it ends or other operations are performed. The other operations can include, but are not limited to, returning to block **802** of FIG. 8A.

With regard to the above-mentioned purpose (2) of the present solution, it should be understood that high temperature during charging reduces the lifetime of electrical energy storage cells **400.** Therefore, the electrical energy storage cells **400** may be operated at a temperature lower than the maximum temperature during charging to extend their lifetime. This may be done by adjusting the charging current in a linear fashion so that generated loss and heat transfer to the environment are in balance at a desired temperature (e.g., 40°C). A reference temperature may be fed into a transfer function **G,** which regulates the current RMS value. If the temperature rises, the current is reduced. This results in an optimal temperature/charging current when fastest charging time is the goal. The transfer function **G** can represent a proportional (P) controller, an integral (I) controller, a proportional and integral (PI) controller, and/or a proportional-integral-derivative (PID) controller.

This solution has many advantages. For example, controlled temperature charging allows for operating at a given temperature to extend cell lifetime.

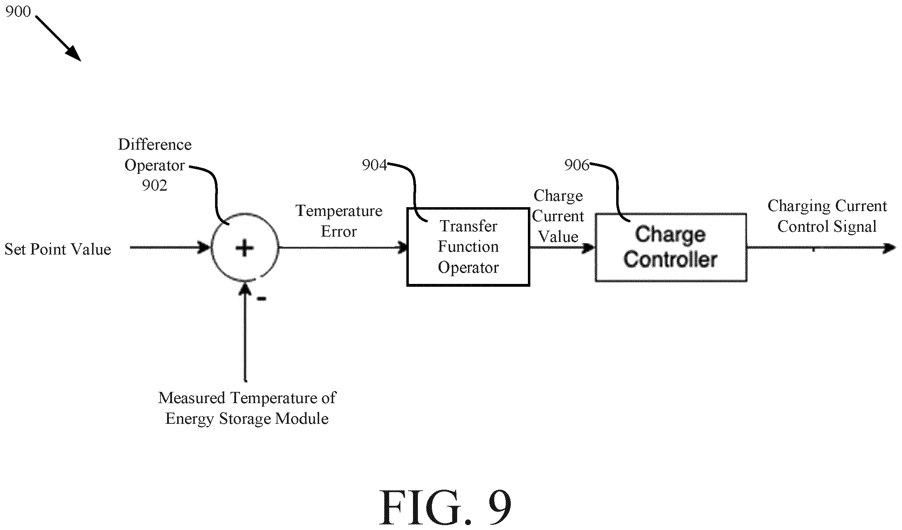

FIG. 9 provides a block diagram of an illustrative circuit **900** implementing a transfer function based scheme for controlling the charging of energy storage modules. Circuit **900** comprises a difference operator **902,** a transfer function operator **904** and a charge controller **906.** The difference operator **902** is configured to compute the difference between a set point value and a measured temperature of an energy storage module (e.g., energy storage module **100** of FIG. 1). The result of this computation is referred to as a temperature error. The temperature error is provided as an input to the transfer function operator **904.** The transfer function operator **904** is configured to compute or otherwise determine a charge current value based on the temperature error. The charge current value is passed to the charge control **906** for controlling the charging current being supplied to the energy module. This control may cause the charging current to remain at its current value or cause the charging current to be adjusted so that the temperature of the energy storage module remains at or near a set point. The set point can be any value selected in accordance with a given application. For example, the set point may be 50°C. The present solution is not limited to this particular set point value.

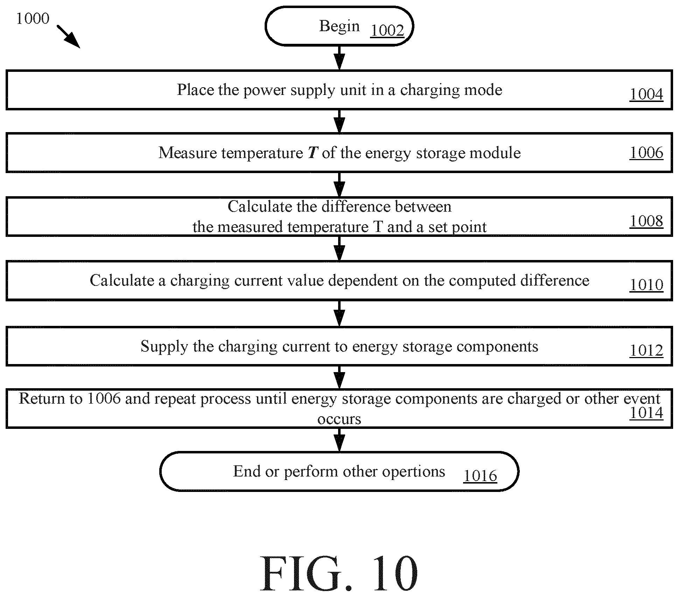

FIG. 10 provides a flow diagram of an illustrative method **1000** that is implemented by a circuit (e.g., circuit **900** of FIG. 9) of a power supply unit (e.g., power supply unit **300** of FIG. 3 or **400** of FIG. 4). Method **1000** begins with **1002** and continues with **1004** where the power supply unit is placed in a charging mode. A temperature of the energy storage module is measured in **1006.** In **1008,** the system computes a difference between the measured temperature and a set point. A charging current value is calculated or otherwise determined in **1010** using the computed difference. Accordingly, the charging current value is dependent on the computed difference. A transfer function may be used for the charging current calculation. Next in **1012,** the charging current is supplied to the energy storage components of the energy storage module. Method **1000** then continues with **1014** where it returns **1006** so that the process can be repeated until the energy storage components are charged or other event occurs. Subsequently, method **1000** ends or other operations are performed as shown by block **1016.**

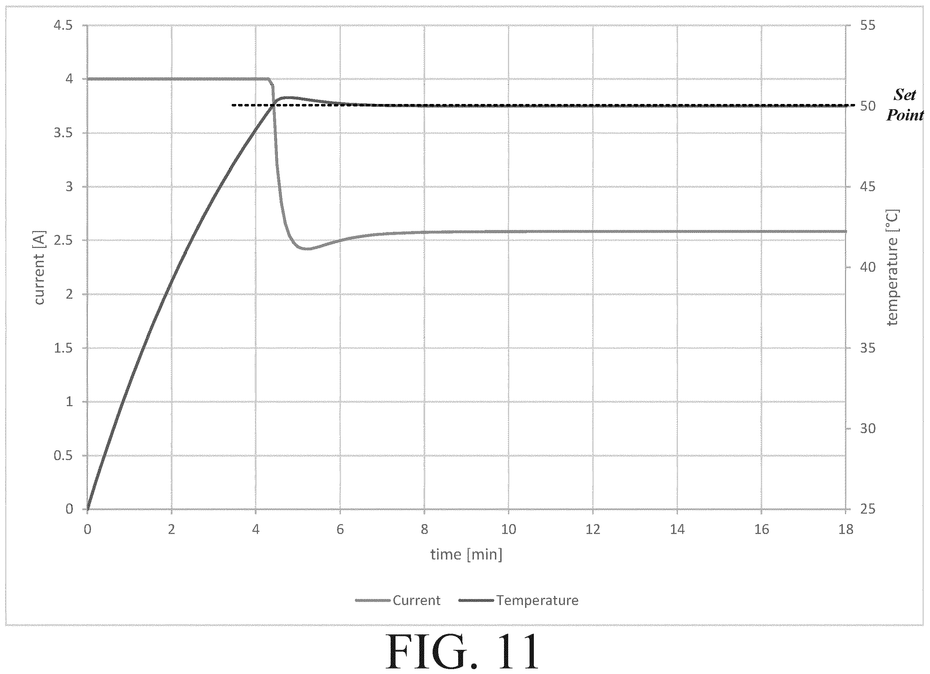

A graph **1100** is provided in FIG. 11 that is useful for understanding the operations of circuit **900** of FIG. 9 and method **1000** of FIG. 10. In the scenario of FIG. 11, a charging current of four amps is supplied to the energy storage components until the temperature of the energy storage modules reaches the set point. The charging current is then linearly decreased to a value that is selected to cause the energy storage module's temperature to remain at or close to the set point. The value of the charging current may be adjusted (e.g., increased or decreased) depending on temperature changes of the energy storage module.

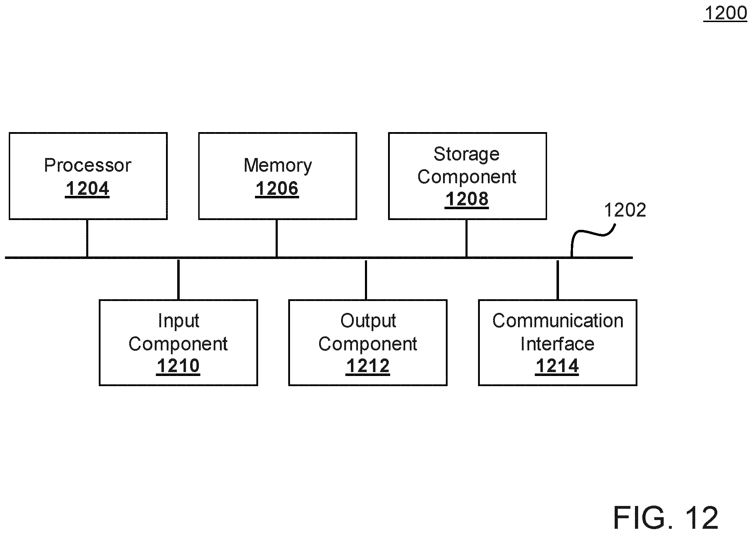

Referring now to FIG. 12, shown is a diagram of example components of a device **1200** according to non-limiting embodiments. Device **1200** may correspond to at least one of module controller **103** and/or system controller **304,** as an example. In some non-limiting embodiments or aspects, such controllers may include at least one device **1200** and/or at least one component of device **1200.** The number and arrangement of components shown are provided as an example. In some non-limiting embodiments or aspects, device **1200** may include additional components, fewer components, different components, or differently arranged components than those shown. Additionally or alternatively, a set of components (e.g., one or more components) of device **1200** may perform one or more functions described as being performed by another set of components of device **1200.**

As shown in FIG. 12, device **1200** may include bus **1202,** processor **1204,** memory **1206,** storage component **1208,** input component **1210,** output component **1212,** and communication interface **1214.** Bus **1202** may include a component that permits communication among the components of device **1200.** In some non-limiting embodiments or aspects, processor **1204** may be implemented in hardware, firmware, or a combination of hardware and software. For example, processor **1204** may include a microcontroller, a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), etc.) that can be programmed to perform a function. Memory **1206** may include random access memory (RAM), read only memory (ROM), and/or another type of dynamic or static storage device (e.g., flash memory, magnetic memory, optical memory, etc.) that stores information and/or instructions for use by processor **1204.**

With continued reference to FIG. 12, storage component **1208** may store information and/or software related to the operation and use of device **1200.** For example, storage component **1208** may include a hard disk (e.g., a magnetic disk, an optical disk, a magneto-optic disk, a solid-state disk, etc.) and/or another type of computer-readable medium. Input component **1210** may include a component that permits device **1200** to receive information, such as via user input (e.g., a touch screen display, a keyboard, a keypad, a mouse, a button, a switch, a microphone, etc.). Additionally or alternatively, input component **1210** may include a sensor for sensing information. Output component **1212** may include a component that provides output information from device **1200** (e.g., a display, a speaker, one or more light-emitting diodes (LEDs), etc.). Communication interface **1214** may include a transceiver-like component (e.g., a transceiver, a separate receiver and transmitter, etc.) that enables device **1200** to communicate with other devices, such as via a wired connection, a wireless connection, or a combination of wired and wireless connections. Communication interface **1214** may permit device **1200** to receive information from another device and/or provide information to another device. For example, communication interface **1214** may include an Ethernet interface, an optical interface, a coaxial interface, an infrared interface, a radio frequency (RF) interface, a universal serial bus (USB) interface, a Wi-Fi^{®} interface, a cellular network interface, and/or the like.

Device **1200** may perform one or more processes described herein. Device **1200** may perform these processes based on processor **1204** executing software instructions stored by a computer-readable medium, such as memory **1206** and/or storage component **1208.** A computer-readable medium may include any non-transitory memory device. A memory device includes memory space located inside of a single physical storage device or memory space spread across multiple physical storage devices. Software instructions may be read into memory **1206** and/or storage component **1208** from another computer-readable medium or from another device via communication interface **1214.** When executed, software instructions stored in memory **1206** and/or storage component **1208** may cause processor **1204** to perform one or more processes described herein. Additionally or alternatively, hardwired circuitry may be used in place of or in combination with software instructions to perform one or more processes described herein. Thus, embodiments described herein are not limited to any specific combination of hardware circuitry and software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions. It shall be appreciated that the present teachings also disclose a software program product comprising instructions which when executed by a suitable computer processor cause the computer processor to perform the methods herein disclosed.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described scenarios. Rather, the scope of the present solution should be defined in accordance with the following claims and their equivalents.

Without excluding further possible embodiments, certain example embodiments are summarized in the following clauses:
Clause 1: A method for controllably charging at least one energy storage element of an energy storage module (e.g., comprising one or more electrical storage component, such as a battery). The method comprises: measuring a temperature of the energy storage module; comparing the temperature to an upper threshold value; allowing a charging current to be supplied to the energy storage module for charging the at least one energy storage element when the temperature is below the upper threshold value; and placing the energy storage module in a charging pause mode when the temperature reaches or rises above the upper threshold value, whereby at least one circuit component of the energy storage module is caused to operate in a low power mode and the charging current is no longer being supplied to the at least one energy storage element.
Clause 2: The method of Clause 1, wherein the charging current is a maximum charging current for the energy storage module.
Clause 3: The method of any of the preceding method clauses, wherein an output voltage for the energy storage module drops to zero volts when the energy storage module in placed in the charging pause mode.
Clause 4: The method of any of the preceding method clauses, further comprising allowing a temperature of the energy storage module to decrease while the energy storage module is in the charging pause mode.
Clause 5: The method of any of the preceding method clauses, further comprising causing the energy storage module to no longer operate in the charging pause mode when the temperature reaches or falls below a lower threshold value.
Clause 6: The method of any of the preceding method clauses, further comprising transitioning the at least one circuit component out of the low power mode responsive to said energy storage module no longer operating in the charging pause mode.
Clause 7: The method of any of the preceding method clauses, further comprising allowing the charging current to once again be supplied to the energy storage module after said transitioning.
Clause 8: The method of any of the preceding method clauses, wherein the at least one circuit component comprises a data processing circuit and/or a transistor active bridge circuit.
Clause 9: The method of any of the preceding method clauses, further comprising selecting a greatest temperature from a plurality of measured temperatures associated with a plurality of energy storage modules, and using the greatest temperature as the temperature during said comparing. E.g., measured temperature may be determined from a plurality of measured temperatures (e.g., greatest temperature) associated with at least some, or all, of the energy storage components (e.g., electrical batteries) of at least one energy storage module.
Clause 10: The method of any of the preceding method clauses, further comprising: selecting a lowest temperature from a plurality of measured temperatures associated with a plurality of energy storage modules; comparing the lowest temperature to a lower threshold value; and causing the energy storage module to no longer operate in the charging pause mode when the lowest temperature reaches or falls below the lower threshold value.
Clause 11: System comprising means for performing the method steps of any of the herein disclosed methods, e.g., method steps.
Clause 12: A software product comprising instructions which when executed by a suitable processor or electrical unit, causes the processor or the electrical unit to perform the herein disclosed methods, e.g., method steps.
Clause 13: A controllable output power circuit, e.g., comprising means (e.g., a circuit and/or a processor), configured to: measure a temperature of the energy storage module; compare the temperature to an upper threshold value; allow a charging current to be supplied to the energy storage module for charging the at least one energy storage element when the temperature is below the upper threshold value; and place the energy storage module in a charging pause mode when the temperature reaches or rises above the upper threshold value, whereby at least one circuit component of the energy storage module is caused to operate in a low power mode and the charging current is no longer being supplied to the at least one energy storage element. A non-transitory computer-readable storage medium may optionally be provided that comprises programming instructions configured to cause the processor to implement a method for controllably charging at least one energy storage element of an energy storage module. The programming instructions may comprise instructions to perform the listed operations.
Clause 14: The controllable output power circuit according to Clause 13, wherein the charging current is a maximum charging current for the energy storage module.
Clause 15: The controllable output power circuit according to any of the preceding circuit clauses, wherein an output voltage for the energy storage module drops to zero volts when the energy storage module in placed in the charging pause mode.
Clause 16: The controllable output power circuit according to any of the preceding circuit clauses, wherein a temperature of the energy storage module decreases while the energy storage module is in the charging pause mode.
Clause 17: The controllable output power circuit according to any of the preceding circuit clauses, wherein the means (e.g., the circuit and/or the processor) is further configured to (e.g., via the programming instructions comprising instructions to) cause the energy storage module to no longer operate in the charging pause mode when the temperature reaches or falls below a lower threshold value.
Clause 18: The controllable output power circuit according to any of the preceding circuit clauses, wherein the means (e.g., the circuit and/or processor) is further configured to (e.g., via programming instructions comprising instructions to) to transition the at least one circuit component out of the low power mode responsive to said energy storage module no longer operating in the charging pause mode.
Clause 19: The controllable output power circuit according to any of the preceding circuit clauses, wherein the means (e.g., the circuit and/or processor) is further configured to (e.g., via programming instructions comprising instructions to) to allow the charging current to once again be supplied to the energy storage module after said transitioning.
Clause 20: The controllable output power circuit according to any of the preceding circuit clauses, wherein the at least one circuit component comprises a data processing circuit and/or a transistor active bridge circuit.
Clause 21: The controllable output power circuit according to any of the preceding circuit clauses, wherein the means (e.g., the circuit and/or processor) is further configured to (e.g., via programming instructions comprising instructions to) to select a greatest temperature from a plurality of measured temperatures associated with a plurality of energy storage modules, and using the greatest temperature as the temperature during said comparing.
Clause 22: The controllable output power circuit according to any of the preceding circuit clauses, wherein the means (e.g., the circuit and/or processor) is further configured to (e.g., via programming instructions comprising instructions to) to: select a lowest temperature from a plurality of measured temperatures associated with a plurality of energy storage modules; compare the lowest temperature to a lower threshold value; and cause the energy storage module to no longer operate in the charging pause mode when the lowest temperature reaches or falls below the lower threshold value.
Clause 23: A method for operating a controllable output power circuit in a charging mode, comprising: measuring a temperature of at least one energy storage module; calculating a difference between the measured temperature and a set point; calculating a charging current based on the difference; supplying the charging current to the at least one energy storage module; and adjusting (e.g., automatically) the charging current responsive to a measured change in the temperature of the at least one energy storage module, whereby the temperature of the at least energy storage module is maintained within a range of the set point throughout charging.
Clause 24: System comprising means for performing the method steps of any of the above method clauses.
Clause 25: A software product comprising instructions which when executed by a suitable processor or system (e.g., circuit or electrical unit), causes the processor or the electrical unit to perform the steps of any of the above method clauses.

The breadth and scope of this disclosure should not be limited by any of the above-described example embodiments, but should be defined only in accordance with the following claims and their equivalents.

## Claims

1. A method for controllably charging at least one energy storage element of an energy storage module, the method comprising:
measuring a temperature of the energy storage module;
comparing the temperature to an upper threshold value;
allowing a charging current to be supplied to the energy storage module for charging the at least one energy storage element when the temperature is below the upper threshold value; and
placing the energy storage module in a charging pause mode when the temperature reaches or rises above the upper threshold value, whereby at least one circuit component of the energy storage module is caused to operate in a low power mode and the charging current is no longer being supplied to the at least one energy storage element.

2. The method according to claim 1, wherein the charging current is a maximum charging current for the energy storage module.

3. The method according to claim 1 or claim 2, wherein an output voltage for the energy storage module drops to zero volts when the energy storage module in placed in the charging pause mode.

4. The method according to any of the above claims, further comprising allowing a temperature of the energy storage module to decrease while the energy storage module is in the charging pause mode.

5. The method according to claim 4, further comprising causing the energy storage module to no longer operate in the charging pause mode when the temperature reaches or falls below a lower threshold value.

6. The method according to claim 5, further comprising transitioning the at least one circuit component out of the low power mode responsive to said energy storage module no longer operating in the charging pause mode.

7. The method according to claim 6, further comprising allowing the charging current to once again be supplied to the energy storage module after said transitioning.

8. The method according to any of the above claims, wherein the at least one circuit component comprises a data processing circuit and/or a transistor active bridge circuit.

9. The method according to any of the above claims, further comprising selecting a greatest temperature from a plurality of measured temperatures associated with a plurality of energy storage modules, and using the greatest temperature as the temperature during said comparing.

10. The method according to any of the above claims, further comprising:
selecting a lowest temperature from a plurality of measured temperatures associated with a plurality of energy storage modules;
comparing the lowest temperature to a lower threshold value; and
causing the energy storage module to no longer operate in the charging pause mode when the lowest temperature reaches or falls below the lower threshold value.

11. The method according to any of the above claims, wherein the energy storage module comprises a plurality of electrical storage components, and preferably the temperature is determined from a plurality of measured temperatures associated with at least some of the electrical storage components.

12. A controllable output power circuit, configured to:
measure a temperature of the energy storage module;
compare the temperature to an upper threshold value;
allow a charging current to be supplied to the energy storage module for charging the at least one energy storage element when the temperature is below the upper threshold value; and
place the energy storage module in a charging pause mode when the temperature reaches or rises above the upper threshold value, whereby at least one circuit component of the energy storage module is caused to operate in a low power mode and the charging current is no longer being supplied to the at least one energy storage element.

13. A method for operating a controllable output power circuit in a charging mode, comprising:
measuring a temperature of at least one energy storage module;
calculating a difference between the measured temperature and a set point;
calculating a charging current based on the difference;
supplying the charging current to the at least one energy storage module; and
adjusting the charging current responsive to a measured change in the temperature of the at least one energy storage module, whereby the temperature of the at least energy storage module is maintained within a range of the set point throughout charging.

14. A system comprising means for performing the steps of any of the above method claims.

15. A software product comprising instructions which when executed by a suitable circuit or system cause the circuit or system to perform the steps of any of the above method claims.
